# DEMANDE DE BREVET EUROPEEN

(11) **EP 4 712 102 A1**
(43) Date de publication de la demande: **18.03.2026**
(21) Numéro de dépôt: 24306495.3
(22) Date de dépôt: 12.09.2024
(51) Int. Cl.: G21C 3/54, G21F 9/02

(54) **PROCÉDÉ ET INSTALLATION DE SYNTHÈSE D'UN SEL COMBUSTIBLE NUCLÉAIRE AVEC RÉCUPÉRATION DE COMPOSÉS CHLORÉS À HAUTE VALEUR AJOUTÉE**

(71) Demandeur: Naarea, 92000 Nanterre (FR)
(72) Inventeur: CHAUVEAU, Romain, 92000 Nanterre (FR); SAUZET, Hugo, 92000 Nanterre (FR)
(74) Mandataire: Santarelli

(57) **Abrégé**

Procédé et installation de synthèse d'un sel combustible nucléaire par chloration d'un ou plusieurs oxydes métalliques solides MₓO_{y(solide)} au moyen d'un agent chlorant enrichi en ³⁷Cl, avec M choisi parmi le plutonium, l'uranium, le magnésium, l'américium, le thorium, le curium, l'aluminium et le sodium, l'un au moins desdits oxydes métalliques contenant un élément fissile, la réaction de chloration ayant lieu dans un réacteur-mélangeur (2) triphasique ou dans réacteur solide/gaz diphasique recevant le(s)dit(s) oxyde(s) métallique(s), optionnellement un sel liquide (NaCl), et un mélange gazeux réactif comprenant l'agent chlorant enrichi et un gaz porteur (G). Le ciel gazeux de la réaction de chloration est récupéré en sortie du réacteur, et les composés chlorés qu'il contient sont isolés à l'aide d'une première série de pièges à composés chlorés (5, 7, 9) fonctionnant par adsorption sélective, chacun desdits pièges étant configuré pour capturer un composé chloré à l'exclusion des composés non chlorés présents dans ledit ciel gazeux.

## Description

La présente demande concerne un procédé et une installation de synthèse d'un sel combustible nucléaire, plus précisément un procédé (et une installation) de synthèse d'un sel combustible nucléaire par chloration d'un oxyde métallique solide MₓO_{y(solide)} au moyen d'un agent chlorant enrichi en chlore 37 (³⁷Cl).

Dans le cadre d'une synthèse par un seul et même acteur d'un sel combustible nucléaire (actif) enrichi en chlore 37, les réactifs gazeux chlorés utilisés comme agent chlorant ne peuvent être enrichis que par séparation isotopique du chlore. Ces réactifs sont de ce fait particulièrement coûteux. En conséquence, la production d'un agent chlorant enrichi, sa mise en oeuvre dans le cadre de la synthèse du sel combustible nucléaire et son recyclage constituent un enjeu économique.

Outre leurs coûts, les procédés connus de synthèse de sels combustibles nucléaires par chloration d'un oxyde métallique MₓO_{y(solide)} présentent l'inconvénient d'être très difficiles à contrôler et à optimiser, notamment en raison d'un milieu réactionnel particulièrement complexe.

En effet, ce milieu réactionnel est usuellement composé de deux ou de trois phases jusqu'à la fin de la réaction de chloration, à savoir :
- un phase gazeuse, comprenant un mélange gazeux réactif injecté dans un réacteur, le mélange gazeux réactif étant essentiellement constitué de l'agent chlorant enrichi et d'un gaz porteur, la phase gazeuse se chargeant de plus en gaz produits par la réaction au fur et à mesure de l'avancement de la réaction de chloration,
- une phase liquide comprenant un sel sous forme liquide lorsqu'un mélange triphasique est considéré,
- une phase solide comprenant l'oxyde métallique MₓO_{y(solide)} sous forme granulaire en suspension dans la phase liquide (si le milieu est triphasique), dotée d'un diamètre équivalent évoluant avec l'avancement de la réaction (modèle à coeur ou à grain rétrécissant supposé applicable) et un sel binaire dont la composition et les propriétés rhéologiques évoluent avec la température et l'avancement de la réaction (mélange de sels, ici des fluides non newtoniens indépendant du temps).Dans le cas d'un mélange diphasique, la chloration se fait dans un lit par le contact d'un agent chlorurant gazeux sur une poudre d'oxyde métallique en l'absence de sel fondu : il s'agit d'une réaction en milieu solide/gaz.

En conséquence, la conduite de la synthèse du sel combustible nucléaire est particulièrement délicate et nécessiterait d'être optimisée.

Par ailleurs, divers procédés ont été proposés pour la capture de gaz chlorés dans l'industrie chimique.

US 3,029,575 divulgue un procédé de purification du produit gazeux issu de l'oxydation du chlorure d'hydrogène (HCl_{(gaz)}) dans le cadre d'un procédé connu sous le nom de procédé Deacon. En d'autres termes, US 3,029,575 divulgue un procédé de récupération du chlore présent dans un produit gazeux chloré contaminé par de l'oxygène. Le procédé de récupération divulgué consiste à adsorber de façon réversible le chlore présent dans le produit gazeux contaminé à l'aide d'une zéolithe 5A. Dans le procédé Deacon, HCl_{(gaz)} réagit avec O_{2(gaz)} pour fournir H₂O_{(gaz)} et Cl_{2(gaz)}. La technique de purification proposée est un procédé d'adsorption modulé en température, dit procédé TSA (acronyme de l'anglais « *Temperature Swing Adsorption* »). L'adsorbeur est préchauffé à 450-480°C, le gaz traité étant à environ 25°C et à pression atmosphérique en phase d'adsorption, la désorption s'effectuant à 450-480°C avec une purge à l'azote si nécessaire. Ceci permet de passer d'une pureté en Cl_{2(gaz)} de 5 à 20% dans le produit gazeux à traiter à environ 90% en sortie de l'adsorbeur, avec un rendement satisfaisant pour l'application concernée.

En théorie, l'utilisation de ce procédé pourrait être envisagé pour traiter les produits gazeux chlorés issus de la synthèse d'un sel combustible nucléaire par chloration. Mais compte tenu de la haute valeur ajoutée de ces produits enrichis en ³⁷Cl, il y aurait un intérêt à utiliser un procédé de traitement offrant un meilleur rendement et/ou une meilleure pureté.

De surcroît, dans le cas où l'agent chlorant enrichi utilisé comprend du Cl_{2(gaz)} et/ou HCl_{(gaz)} et/ou du CCl_{4(gaz)}, la synthèse d'un sel combustible par chloration génère des produits gazeux non chlorés qui sont adsorbés par la zéolithe 5A (notamment O_{2(gaz)}, CO_{(gaz)}, CO_{2(gaz)} et H₂O_{(gaz)}). Le procédé de purification proposé par US 3,029,575 ne permet donc pas d'isoler et de récupérer le chlore issu de la réaction de synthèse d'un sel combustible par chloration, notamment lorsque la chloration a lieu avec un agent chlorant contenant du Cl_{2(gaz)} et/ou du HCl_{(gaz)} et/ou du CCl_{4(gaz)}.

Les solutions alternatives connues pour la capture sélective du dichlore sont la distillation sous pression ou à froid, comme l'enseigne US 2007/0277551, ou encore l'absorption/régénération du chlore mis au contact d'un solvant tel que l'eau, tel que divulgué par US 5,788,743.

Appliqués au traitement des gaz chlorés issus de la synthèse d'un sel combustible nucléaire par chloration, ces procédés peuvent dénaturer la matrice de fond constituée du gaz porteur et des produits non chlorés issus de la réaction de chloration. Or, comme on le comprendra plus loin, les inventeurs ont montré qu'il y a un intérêt à ne pas dénaturer cette matrice.

En outre, la courbe rendement / pureté de ces deux procédés n'est pas satisfaisante. A titre d'exemple, la récupération du dichlore absorbé en solution est difficile et énergivore et la récupération d'un dichlore pur (sans solvant) dans le gaz traité nécessite un procédé de purification supplémentaire, par exemple par distillation. Pour la distillation, une énergie importante est déployée pour se positionner au point d'équilibre liquide vapeur du Cl_{2(gaz)} et une partie du Cl_{2(gaz)} est perdue en tête de colonne de rectification.

De plus, l'utilisation de tels équipements (colonne d'absorption, colonne de régénération, colonne de distillation, compresseur, refroidisseur) complique le procédé de purification dans le cas d'une production de sel combustible nucléaire par lots, là où une solution d'adsorption à charge unique serait préférable.

### Exposé de l'invention

L'objectif principal de l'invention est de proposer un procédé de synthèse d'un sel combustible nucléaire par chloration d'un oxyde métallique, qui présente un coût réduit et/ou un débit de production de sel augmenté et/ou un rendement amélioré.

L'invention vise aussi et surtout à fournir un procédé de récupération de composés chlorés gazeux qui soit moins énergivore, moins onéreux et plus performant que les procédés et dispositifs de capture de chlore connus susceptibles d'être utilisés dans le cadre de la synthèse d'un sel combustible nucléaire par chloration d'un oxyde métallique, et qui soit particulièrement adapté à cette application.

A cette fin, l'invention propose un procédé de synthèse d'un sel combustible nucléaire par chloration au moyen d'un agent chlorant enrichi en ³⁷Cl, la chloration portant sur un ou plusieurs oxydes métalliques solides MₓO_{y(solide)} où M est choisi parmi le plutonium (Pu), l'uranium (U), le magnésium (Mg), l'américium (Am), le thorium (Th) et le curium (Cm), l'aluminium (Al) et le sodium (Na), l'un au moins desdits oxydes métalliques solides contenant un élément fissile, la réaction de chloration ayant lieu dans un réacteur (qui peut être un réacteur-mélangeur ou un réacteur solide-gaz selon la voie de synthèse -triphasique ou diphasique- retenue) contenant un milieu réactionnel diphasique ou triphasique qui comprend :
- le ou les oxydes métalliques solides MₓO_{y(solide)},
- un mélange gazeux réactif comprenant ledit agent chlorant enrichi et un gaz porteur choisi parmi les gaz nobles, tels que l'argon et l'hélium, et les gaz inertes, tels que le diazote,
- et un sel liquide dans le cas d'un milieu réactionnel triphasique,
la réaction de chloration produisant :
- au moins un chlorure métallique MᵤClᵥ formant le sel combustible nucléaire, le chlorure métallique MᵤClᵥ apparaissant sous forme solide en solution dans le sel liquide dans le cas d'un milieu réactionnel triphasique, et sous forme liquide ou solide dans le cas d'un milieu réactionnel diphasique,
- un ciel gazeux contenant un ou des composés chlorés ainsi que des composés non chlorés, tels que par exemple du dioxygène O_{2(gaz)} et/ou du monoxyde de carbone CO_{(gaz)} et/ou du dioxyde de carbone CO_{2(gaz)} et/ou du dihydrogène H_{2(gaz)} et/ou de la vapeur d'eau H₂O_{(gaz)} (les composés non chlorés générés dépendant de l'agent chlorant enrichi utilisé).

Le procédé de synthèse de sel combustible nucléaire selon l'invention est caractérisé en ce que :
- le ciel gazeux de la réaction de chloration est récupéré en sortie du réacteur,
- les composés chlorés contenus dans le ciel gazeux sortant du réacteur sont isolés à l'aide d'une première série de pièges à composés chlorés fonctionnant par adsorption sélective, chacun desdits pièges à composés chlorés comprenant un adsorbant sélectif configuré pour capturer de façon sélective un -et de préférence un seul- composé chloré à l'exclusion des composés non chlorés présents dans ledit ciel gazeux.

Par opposition aux procédés connus de capture de composés chlorés par absorption (qui utilisent un solvant) ou par distillation, l'utilisation de pièges par adsorption offre une meilleure sélectivité de sorte que les produits récupérés en désorbant lesdits pièges présentent une pureté plus élevée, bien supérieure à 90% et même de l'ordre de 99%, ce qui est un avantage indéniable eu égard à la valeur des composés chlorés cibles.

De plus, de tels pièges sont particulièrement compacts et de conception simple ; de même, la récupération (par désorption) du composé chloré piégé est très simple et ne nécessite pas d'équipements complexes et/ou encombrants. Quant au piège par adsorption à la zéolithe 5A divulgué par US 3,029,575, il adsorbe aussi certains des produits non chlorés issus de la réaction de chloration objet de l'invention ; il n'est donc pas adapté à cette application.

L'invention s'applique plus particulièrement à un procédé de synthèse dans lequel :
- l'agent chlorant enrichi comprend du dichlore gazeux Cl_{2(gaz)} enrichi en ³⁷Cl et/ou du tétrachlorométhane gazeux CCl_{4(gaz)} enrichi en ³⁷Cl et/ou du chlorure d'hydrogène gazeux HCl_{(gaz)} enrichi en ³⁷Cl, la réaction de chloration suivant le schéma réactionnel

   **a** CCl_{4(gaz)} + **b** Cl_{2(gaz)} + **c** HCl_{(gaz)} + **d** MₓO_{y(solide)} => **e** MᵤClᵥ₍ₛₒₗᵤₜᵢₒₙ₎ **+f** Cl_{2(gaz)} + **g** HCl_{(gaz)} **+h** CO_{(gaz)} + **i** CO_{2(gaz)} + **j** O_{2(gaz)} + **k** H_{2(gaz)} + **l** H₂O_{(gaz)}
- en cas de milieu réactionnel triphasique, le sel liquide est du chlorure de sodium NaCl_{(liquide)},
- la première série de pièges à composés chlorés comprend, successivement et dans cet ordre, un piège sélectif à HCl_{(gaz)} puis un piège sélectif à Cl_{2(gaz)} puis, de façon optionnelle, un piège à CCl_{4(gaz)}.
A noter qu'en cas de mélange diphasique, la synthèse est réalisée en milieu solide/gaz et sans sel fondu (sel liquide). La réaction de chloration suit le même schéma réactionnel à la différence que le produit de réaction MᵤClᵥ peut-être disponible soit sous forme solide, soit sous forme liquide.

Dans toute la suite, une description de l'invention est proposée ainsi que des exemples s'appliquant au cas de mélange le plus complexe c'est-à-dire au cas d'un milieu réactionnel triphasique, et le ou les chlorures métalliques sont obtenus en solution dans le sel liquide du milieu triphasique. Toutefois, la description s'applique également au milieu réactionnel diphasique solide/gaz, qui conduit à l'obtention de chlorures métalliques sous forme liquide ou solide.

Comme défini précédemment, l'invention consiste donc, en premier lieu, à récupérer l'ensemble du ciel gazeux de la réaction de chloration et à traiter ce ciel gazeux de façon sélective de façon à en extraire les composés chlorés enrichis produits par la réaction de chloration ou non consommés par celle-ci, sans arrêter les composés non chlorés issus de la réaction de chloration.

Proposée pour la première fois dans le cadre d'un procédé de synthèse de sel combustible nucléaire, la capture sélective des composés chlorés permet de réduire de façon considérable les coûts de production du sel combustible nucléaire puisque ces composés chlorés, qui sont des gaz enrichis en ³⁷Cl et par conséquent très coûteux, peuvent être réutilisés pour produire plus de sel combustible nucléaire ou pour d'autres applications éventuelles.

La capture des composés chlorés permet aussi de simplifier la mise à l'évent des gaz produits.

La récupération de l'ensemble du ciel gazeux de la réaction de chloration et l'extraction sélective des composés chlorés qu'il contient permet de plus d'exploiter les autres produits gazeux de la réaction, c'est-à-dire les composés non chlorés tels que CO_{(gaz)}, CO_{2(gaz)}, H_{2(gaz)} et O_{2(gaz)} dans une matrice de gaz porteur noble ou inerte, comme expliqué plus loin.

A noter que la caractéristique susmentionnée selon laquelle l'agent chlorant enrichi comprend du Cl_{2(gaz)} et/ou du CCl_{4(gaz)} et/ou du HCl_{(gaz)} signifie que l'agent chlorant enrichi peut comprendre, à titre de composés chlorés réactifs enrichis en ³⁷Cl soit uniquement du Cl_{2(gaz)}, soit uniquement du CCl_{4(gaz)}, soit uniquement du HCl_{(gaz)}, soit un mélange de deux de ces composés chlorés réactifs (Cl_{2(gaz)}+CCl_{4(gaz)} ou Cl_{2(gaz)}+HCl_{(gaz)} ou CCl_{4(gaz)}+HCl_{(gaz)}), soit un mélange des trois composés.

Dans le cas où l'agent chlorant enrichi comprend du HCl_{(gaz)} (seul ou avec du Cl_{2(gaz)} ou avec CCl_{4(gaz)}), les produits gazeux de la réaction de chloration comprennent au moins Cl_{2(gaz)}, H_{2(gaz)}, O_{2(gaz}, H₂O_{(gaz)}, ainsi que du HCl_{(gaz)} provenant de la réaction secondaire (spontanée) entre les produits H_{2(gaz)} et Cl_{2(gaz)}, et le ciel gazeux récupéré du réacteur comprend au moins HCl_{(gaz)}, Cl_{2(gaz)}, H_{2(gaz)}, O_{2(gaz)}, H₂O_{(gaz)}.

Dans le cas où l'agent chlorant comprend du CCl_{4(gaz)} (seul ou avec du Cl_{2(gaz)} ou avec HCl_{(gaz)}), les produits gazeux de la réaction de chloration comprennent au moins Cl_{2(gaz)}, CO_{(gaz)}, CO_{2(gaz)}, O_{2(gaz)}, et le ciel gazeux récupéré du réacteur comprend au moins CCl_{4(gaz)}, Cl_{2(gaz)}, CO_{(gaz)}, CO_{2(gaz)}, O_{2(gaz)}, ainsi que d'éventuelles traces par relargage de HCl_{(gaz)} et de H₂O_{(gaz)}.

Dans le cas où l'agent chlorant comprend du Cl_{2(gaz)} (seul ou avec du CCl_{4(gaz)}, ou avec HCl_{(gaz)}) les produits gazeux de la réaction de chloration comprennent alors au moins O_{2(gaz)} et HCl_{(gaz)}, et le ciel gazeux récupéré du réacteur comprend au moins Cl_{2(gaz)}, O_{2(gaz)}, HCl_{(gaz)}, ainsi que d'éventuelles traces par relargage de H₂O_{(gaz)}.

Ainsi, dans tous les cas de figure, le ciel gazeux comprend du Cl_{2(gaz)} en quantité non négligeable, et du HCl_{(gaz)} en trace ou quantité non négligeable, c'est la raison pour laquelle il est avantageux de prévoir au moins un piège sélectif à HCl_{(gaz)} et un piège sélectif à Cl_{2(gaz)} dans la première série de pièges à composés chlorés. A l'inverse, le piège à CCl_{4(gaz)}, défini comme optionnel, peut ne pas être présent si l'agent chlorant enrichi utilisé ne comprend pas de CCl_{4(gaz)}.

L'utilisation d'un agent chlorant enrichi contenant du Cl_{2(gaz)} et/ou du CCl_{4(gaz)} et/ou du HCl_{(gaz)} n'est pas limitative : d'autres agents chlorants enrichis peuvent être utilisés, comme par exemple des agents chlorants contenant ZrCl₄, FeCl₂, NH₄Cl, etc., enrichis en ³⁷Cl.

De même, un sel vecteur (liquide) autre que le NaCl peut être utilisé.

Selon des modes de réalisation particuliers de l'invention, le procédé de synthèse de sel combustible nucléaire selon l'invention répond en outre aux caractéristiques suivantes, mises en oeuvre individuellement ou selon toute combinaison techniquement possible et opérante.

Les séparations sélectives de HCl_{(gaz)}, puis de Cl_{2(gaz)} sont de préférence réalisées par tamisage moléculaire en excluant l'accès aux pores du tamis des molécules de CCl_{4(gaz)}, CO_{(gaz)}, CO_{2(gaz)}, H_{2(gaz)}, O_{2(gaz)}.

Dans certains modes de réalisation, le piège sélectif à HCl_{(gaz)} comprend un tamis moléculaire choisi parmi les bases carbonées hydrophobes dotées de pores d'une taille de l'ordre de 3Â pour favoriser l'adsorption exclusive d'HCl_{(gaz)}, en particulier les adsorbants nanostructurés tels que les nanotubes de carbone ou les carbones dérivés de carbures (« *carbide derived carbon* » en anglais).

Dans certains modes de réalisation, le piège sélectif à Cl_{2(gaz)} comprend un tamis moléculaire choisi parmi les adsorbants à base carbonée hydrophobe, en particulier les nanotubes de carbone et les carbures dérivés de carbone, dotés de pores d'une taille de l'ordre de 4Å pour favoriser l'adsorption exclusive de Cl_{2(gaz)}.

Dans certains modes de réalisation, le piège à CCl_{4(gaz)} comprend un média adsorbant choisi parmi les matériaux carbonés poreux dotés d'une structure microporeuse tel que les charbons actifs microporeux, dont la taille des pores est inférieure à 2 nm.

Le procédé de synthèse de sel combustible nucléaire selon l'invention peut être mis en oeuvre sous la forme d'un procédé par lots (« *batch* » en anglais) ou d'un procédé continu.

Dans certains modes de réalisation, la réaction de chloration est surveillée et pilotée par un système de contrôle et le ciel gazeux traité sortant de la première série de pièges à composés chlorés est envoyé dans un analyseur relié audit système de contrôle et configuré pour mesurer au moins une caractéristique, par exemple la teneur, d'au moins l'un des composés non chlorés (CO_{(gaz)}, CO_{2(gaz)}, O_{2(gaz)}, H_{2(gaz)}) issus de la réaction de chloration (et par conséquent présent dans le ciel gazeux sortant de la première série de piège à composés chlorés puisque seuls les composés chlorés ont été extraits, de façon très sélective, du ciel gazeux sortant du réacteur). Cette caractéristique est ensuite utilisée par le système de contrôle pour accéder à des informations sur la réaction de chloration, telles que l'avancement de la réaction, la cinétique de la réaction, la compréhension des mécanismes limitants, etc. Ces informations sont notablement utilisées afin de piloter la réaction en régulant certains paramètres du procédé incluant la température du réacteur, le débit du mélange gazeux réactif injecté dans le réacteur et la teneur en agent chlorant injecté, etc.

L'une des contraintes rencontrées dans le cadre de la synthèse d'un sel combustible nucléaire tient à la nature du produit obtenu : la réaction de fission du sel combustible nucléaire produit ne doit pas se déclencher c'est-à-dire que la criticité du sel combustible nucléaire produit ne doit pas être atteinte. Ceci implique de travailler avec un volume de réacteur réduit et oblige à multiplier le nombre de réacteurs pour augmenter la production. Dès lors, pour que la synthèse du sel combustible nucléaire soit rentable et puisse être envisagée à une échelle industrielle malgré la relative petite taille du réacteur, il est préférable d'optimiser la réaction de chloration de façon à augmenter soit le rendement de cette réaction, soit -de préférence- le débit de sel combustible nucléaire produit.

L'analyse d'au moins l'un des produits gazeux non chlorés de la réaction de chloration (CO_{(gaz)}, CO_{2(gaz)}, O_{2(gaz)}, H_{2(gaz)}) peut servir à accéder de façon très simple à des informations sur ladite réaction qui permettent d'optimiser la production du sel combustible nucléaire. Et cette analyse est facilitée, voire est rendue possible, par la capture sélective préalable des produits chlorés présent dans le ciel gazeux sortant du réacteur, grâce à laquelle les instruments de mesure de l'analyseur ne sont pas soumis aux risques de dégradation des matériaux liés à une exposition aux composés chlorés (très corrosifs). Comme on le verra plus loin, dans certains modes de réalisation, ces instruments de mesure ne sont pas non plus soumis aux risques liés à la présence d'eau ou d'humidité.

Le suivi analytique peut ainsi être assuré au moyen d'instruments de mesure et d'analyse de gaz sensibles, rapides, fiables et économiques, tels qu'une sonde zircone pour le dioxygène O_{2(gaz)} et/ou un capteur infra rouge pour le CO_{(gaz)} et/ou le CO_{2(gaz)} et/ou une diode Laser pour le H_{2(gaz)}.

A noter que l'analyseur peut être implanté *in situ* ou ex *situ.* S'il est ex *situ*, un système d'échantillonnage peut être prévu, assurant la régulation en pression, en température et en débit des échantillons (analytes) alimentant l'analyseur.

L'analyse d'au moins l'un des produits gazeux non chlorés présents dans le ciel gazeux récupéré du réacteur permet notamment, en production continue, le suivi en temps réel de la réaction de chloration, ce qui permet de réguler en temps réel le débit d'injection du mélange gazeux réactif dans le milieu réactionnel de façon à maximiser le débit de production du sel combustible nucléaire.

Le suivi de la réaction permet aussi de réguler la température du milieu réactionnel non seulement par pilotage du système de chauffage du réacteur mais aussi par pilotage du système d'agitation dudit réacteur (dans le cas d'un réacteur-mélangeur accueillant un milieu triphasique) et par pilotage du débit d'injection du mélange gazeux réactif (la température dépendant notamment de l'avancement et de la vitesse de la réaction, qui est exothermique, ainsi que de l'homogénéité du milieu).

De la même façon, dans le cas d'un procédé de synthèse par lots, le débit d'injection du mélange gazeux réactif dans un lot d'oxyde métallique (avec éventuellement du sel liquide) peut être régulé de façon à maximiser le débit de production du sel combustible nucléaire ; par ailleurs, les informations fournies par l'analyse des composés non chlorés au cours de la production d'un lot permettent d'améliorer le design du réacteur(dimensions, système de chauffage, système d'agitation lorsqu'il existe, moyens d'injection du mélange gazeux réactif et réglage de ces moyens, etc.).

On notera qu'un faible débit d'injection du mélange gazeux réactif a des effets contradictoires sur le rendement de la réaction : un débit faible augmente le temps de séjour et de contact entre les molécules de réactifs, ce qui est favorable ; dans le même temps, il pénalise l'homogénéité du milieu réactionnel (surtout dans le cas où un mélange homogène du milieu réactionnel ne peut pas être obtenu par des moyens d'agitation mécaniques mais nécessite l'utilisation d'une rampe de bullage, dont l'efficacité dépend du débit d'injection du gaz). A l'inverse, un débit d'injection du mélange gazeux réactif élevé améliore l'homogénéité du milieu réactionnel triphasique en créant des turbulences ; mais un débit de mélange gazeux réactif élevé (combiné à la nécessaire petite taille du réacteur) diminue le temps de séjour de l'agent chlorant dans le réacteur, ce qui limite le taux de conversion dudit agent chlorant et entraîne une plus grande consommation d'agent chlorant enrichi, qui est un réactif coûteux. Grâce à l'invention, ce dernier point n'est plus un facteur économique limitant puisque les composés chlorés sont récupérés en sortie du réacteur. Enfin, comme précédemment indiqué, le débit d'injection du mélange gazeux va aussi influer sur l'avancement de la réaction et, partant, sur la température du milieu réactionnel, qui elle-même a un impact sur l'homogénéité du milieu réactionnel (une température élevée réduit la viscosité du sel et donc favorise l'homogénéisation du mélange réactionnel) et donc sur le rendement et la cinétique de la réaction, etc..

Comme on le voit, le pilotage des moyens d'injection du mélange gazeux réactif, ainsi que des systèmes de chauffage et d'agitation (lorsque ce dernier existe) du réacteur a une grande influence sur le rendement de la réaction de chloration et sur le débit de production du sel combustible. En conséquence, une meilleure connaissance de cette réaction grâce à l'analyse d'un ou plusieurs des composés non chlorés produits facilite l'optimisation de la production, qu'il s'agisse d'un procédé de production continu ou par lots.

Dans le cas de la voie de synthèse triphasique, l'oxyde métallique MₓO_{y(solide)} peut être introduit dans le réacteur-mélangeur soit directement soit en suspension dans le sel liquide.

Dans certains modes de réalisation, la réaction de chloration est réalisée à une température comprise entre 400°C et 900°C, idéalement entre 500°C et 650°C, et à pression atmosphérique au sein du réacteur.

Dans certains modes de réalisation, dans lesquels le réacteur comprend un système de chauffage et éventuellement (dans le cas d'une synthèse par la voie triphasique) un système d'agitation, le procédé de synthèse selon l'invention comprend de plus :
- le comptage volumétrique du ciel gazeux à traiter entrant dans l'analyseur, à l'aide d'un compteur de gaz volumétrique équipé d'un émetteur à impulsion instrumenté en pression et en température,
- le suivi en temps réel des données suivantes :
   -- les débits molaires en CO_{(gaz)} et/ou CO_{2(gaz)} et/ou O_{2(gaz)} et/ou H_{2(gaz)}, calculés à partir du débit volumique fourni par le compteur de gaz volumétrique et des concentrations molaires en CO_{(gaz)} et/ou CO_{2(gaz)} et/ou O_{2(gaz)} et/ou H_{2(gaz)} mesurées par l'analyseur,
   -- la température du milieu réactionnel (cette température pouvant être calculée à partir des débits molaires précédents et de la température mesurée par le compteur volumétrique, ou être mesurée à l'aide d'un capteur de température installé dans le réacteur),
   -- l'avancement et la vitesse de la réaction de chloration, déterminées à partir des mesures de température et de pression du compteur volumétrique et des débits molaires en CO_{(gaz)} et/ou CO_{2(gaz)} et/ou O_{2(gaz)} et/ou H_{2(gaz)}, connaissant le débit d'injection en mélange gazeux réactif dans le réacteur et la teneur en agent chlorant enrichi dudit mélange gazeux réactif.

Comme précédemment expliqué, ce suivi permet de qualifier le réacteur, d'identifier ses conditions idéales de fonctionnement, et de comprendre les mécanismes limitants (régime chimique, régime diffusionnel, régime mixte).

La connaissance du mécanisme cinétique limitant permet d'identifier le paramètre sur lequel il convient de travailler pour améliorer la performance du réacteur. Dans le cas d'un régime diffusionnel, c'est le contrôle du temps de contact gaz/solide/liquide et du système d'agitation qui permet l'amélioration du débit de production du sel combustible. Dans le cas du régime chimique, le contrôle de la concentration en agent chlorant enrichi (Cl_{2(gaz)} et/ou CCl_{4(gaz)} et/ou HCl_{(gaz)}) et/ou du débit de mélange gazeux réactif permet l'amélioration de la vitesse de production du sel combustible. Enfin, en régime mixte, la régulation en température du réacteur peut aussi constituer une variable intéressante pour maximiser la production de sel combustible. Compte tenu de l'évolution des propriétés du sel dans le réacteur et de la granulométrie de l'oxyde métallique au cours de l'avancement de la réaction, il est possible que le mécanisme cinétique limitant évolue avec le taux d'avancement.

Dans certains modes de réalisation (en production continue ou par lots), mis en oeuvre dans une installation comprenant un système de contrôle, un analyseur et un compteur volumétrique tels que précédemment définis et dans laquelle le réacteur est équipé d'un système de chauffage, ainsi que d'un système d'agitation dans le cas d'un milieu réactionnel triphasique, le procédé de synthèse comprend de plus :
- le pilotage en temps réel du système de chauffage du réacteur et de son système d'agitation (lorsqu'il existe),
- la régulation en temps réel de la température du mélange gazeux réactif injecté dans le milieu réactionnel (l'installation étant équipée de moyens techniques correspondants),
- la régulation en temps réel du débit (l'installation étant équipée de moyens techniques correspondants) de l'agent chlorant enrichi et/ou la régulation en temps réel du débit du gaz porteur à l'entrée d'un contacteur, saturé en agent chlorant enrichi et dans lequel est formé le mélange gazeux réactif, et/ou la régulation en temps réel du débit de mélange gazeux réactif à l'entrée du réacteur,
- la régulation en temps réel de la température du milieu réactionnel par pilotage du système de chauffage du réacteur et du système d'agitation du réacteur lorsqu'ils existe et par pilotage du débit et de la température du mélange gazeux réactif introduit dans le réacteur,
- et, si le procédé est mis en oeuvre de façon continue, la régulation du débit de sel liquide injecté dans le milieu réactionnel et du débit d'oxyde(s) métallique(s) solide(s) injecté(s) dans le milieu réactionnel ou introduit(s) dans le sel liquide.

Dans le cas d'un procédé par lots, chacun des pièges de la première série de pièges à composés chlorés est dimensionné pour pouvoir traiter entièrement au moins une quantité de ciel gazeux correspondant à un lot. En d'autres termes, le piège a une charge utile dimensionnée pour la durée du lot.

Chacun des pièges à composés chlorés peut alors prendre la forme d'une colonne cylindrique contenant un média adsorbant sélectif, laquelle colonne est dotée d'une entrée gaz pour l'introduction dans le piège du ciel gazeux à traiter, d'une sortie gaz d'où sort le ciel gazeux traité, appauvri en composé chloré piégé, le média adsorbant étant choisi parmi les médias aptes à arrêter de façon sélective le composé chloré cible tout en étant perméables à la matrice gaz constituée du gaz porteur, des composés non chlorés présents dans le ciel gazeux de la réaction de chloration et éventuellement des autres composés chlorés non concernés par le piège en question.

Chacun des pièges à composés chlorés (Cl_{2(gaz)} ou CCl_{4(gaz)} ou HCl_{(gaz)}) peut fonctionner à froid de -60°C à 10°C, ou à température ambiante de 10°C à 40°C, ou à chaud de 40°C à 80°C et ce, sous vide de 0,1 bara à 0,9 bara, ou à pression atmosphérique de 0,9 bara à 1,1 bara ou sous pression de 1,1 bara à 10 bara.

Dans certains modes de réalisation, à la fin de la production d'un lot :
- chacun des pièges de la première série de pièges à composés chlorés est déconnecté du circuit et est régénéré à une température comprise entre 35°C et 500°C, de préférence entre 100°C et 300°C, et idéalement entre 150°C et 200°C, sous vide (à cette fin, une pompe à vide est branchée sur la sortie gaz du piège) à une pression absolue comprise entre 0,001 mbara et 900 mbara et préférentiellement entre 1 mbara et 100 mbara, avec une élution par balayage du média adsorbant au moyen d'un gaz vecteur, dit gaz d'élution, noble ou inerte, propre et sec, injecté dans le piège par l'entrée gaz. La pompe à vide -configurée pour être résistante aux gaz corrosifs- peut présenter des garnitures et tuyauteries en PTFE ; elle peut, elle aussi, être balayée en gaz d'élution, pour refroidir le gaz désorbé et diluer sa teneur en chlore afin d'améliorer la durée de vie de ladite pompe à vide ;
- les composés chlorés (gazeux) ainsi désorbés sont comprimés et/ou refroidis pour être stockés sous forme liquide ou solide. Le produit stocké présente une pureté de l'ordre de 99%.

Le gaz désorbé du piège sélectif à HCl_{(gaz)} peut ainsi être refroidi à - 90°C à pression atmosphérique ou être comprimé jusqu'à 70 à 90 bar à température ambiante, pour récolter le HCl_{(gaz)} pur sous forme liquide.

Le gaz désorbé du piège sélectif à Cl_{2(gaz)} peut être refroidi à -34°C à pression atmosphérique ou être comprimé jusqu'à 6 bar à température ambiante, pour récolter le Cl_{2(gaz)} pur sous forme liquide.

Le gaz désorbé du piège sélectif à CCl_{4(gaz)} peut être condensé par refroidissement à température ambiante ou froide, de préférence entre -20°C et 10°C pour récolter le CCl_{4(gaz)} pur sous forme liquide, ou entre -30°C et -23°C pour récolter le CCl_{4(gaz)} pur sous forme solide.

Dans le cas où le procédé de synthèse selon l'invention est mis en oeuvre sous la forme d'un procédé continu, chacun des pièges de la première série de pièges à composés chlorés (Cl_{2(gaz)}, CCl_{4(gaz)}, HCl_{(gaz)}) est de préférence un piège, dit piège VTSA, fonctionnant selon un procédé d'adsorption modulé en vide et en température (VTSA étant l'acronyme de l'anglais « *Vacuum and Temperature Swing Adsorption* »)*.*

Un tel piège VTSA comprend un milieu adsorbant sélectif pour le composé chloré cible (Cl_{2(gaz)}, CCl_{4(gaz)}, HCl_{(gaz)}), une entrée d'alimentation pour l'introduction du ciel gazeux à traiter, une sortie de production d'où sort le ciel gazeux traité, une entrée d'élution pour l'introduction d'un gaz d'élution, et une sortie de purge pour la récupération d'un gaz de purge riche en composé chloré piégé élué, le milieu adsorbant étant choisi parmi des milieux poreux qui, d'une part ont une capacité d'adsorption du composé chloré cible satisfaisante, c'est-à-dire de l'ordre de 1 à 60% en masse pour des teneurs en composé chloré cible dans le ciel gazeux à traiter qui sont comprises entre 1% et 70% molaire, et qui d'autre part sont perméables et résistants au gaz de fond constitué du gaz porteur et des composés non chlorés présents dans le ciel gazeux de la réaction de chloration. Le gaz d'élution est de préférence un gaz noble ou inerte, propre et sec, par exemple le gaz porteur ; en variante, on peut éventuellement utiliser, à titre de gaz d'élution, le ciel gazeux traité récupéré à la sortie de production du piège.

La sortie de purge permet la récupération du composé piégé et enrichi à plus de 90% molaire, le gaz de complément étant un gaz noble ou inerte utilisé pour réaliser l'élution durant la régénération.

Dans certains modes de réalisation, les pièges VTSA à composés chlorés comprennent chacun au moins deux colonnes d'adsorption, idéalement quatre colonnes d'adsorption (voire plus), fonctionnant en alternance pour capturer et rejeter sélectivement le composé chloré cible (Cl_{2(gaz)}, CCl_{4(gaz)}, HCl_{(gaz)}), selon un schéma de fonctionnement continu comprenant douze étapes avec six phases distinctes : adsorption, purge sous vide, purge sous vide chauffé, élution sous vide chauffé, refroidissement et pressurisation.

Ce fonctionnement en alternance permet d'assurer un fonctionnement continu ou quasi-continu du procédé de synthèse de sel combustible et une gestion continue, au niveau des pièges, des débits d'entrée de ciel gazeux à traiter (chargés en composé chloré cible), de sortie de ciel gazeux traité (appauvri en composé chloré), et de purge (sortie de gaz enrichi à plus de 90% en composé chloré).

Dans certains modes de réalisation, les pièges VTSA à composés chlorés comprennent, successivement et dans cet ordre, un piège VTSA à HCl_{(gaz)}, un piège VTSA à Cl_{2(gaz)} et un piège VTSA à CCl_{4(gaz)}.

Le milieu adsorbant sélectif du piège VTSA à HCl_{(gaz)} est choisi parmi :
- les matériaux carbonés microporeux, tels que les nanotubes de carbone ou les carbones dérivés de carbures ou les charbons actifs ou autres tamis moléculaires carbonés,
- les zéolithes artificielles, en particulier les zéolithes 3A, à condition que le ciel gazeux à traiter soit sec,
qui ont une taille de pores caractéristique comprise entre 0,2 nm et 0,6 nm, préférablement entre 0,3 nm et 0,4 nm, c'est-à-dire une taille de pore favorisant la capture sélective de HCl_{(gaz)} par tamisage moléculaire, ladite taille de pore caractéristique étant déterminée par la méthode NLDFT de la théorie fonctionnelle de la densité non locale (NLDFT étant acronyme de l'anglais « *Non-local Density Functional Theory* ») avec du CO₂ comme molécule sonde à 273 K et avec un modèle géométrique du type fente (« *slit* pore »).

Pour une teneur en HCl_{(gaz)} comprise entre 1% et 10% molaire dans le ciel gazeux à traiter, on choisira de préférence le milieu adsorbant parmi les matériaux poreux susmentionnés qui ont de plus une capacité d'adsorption sélective en HCl_{(gaz)} comprise entre 0,5% et 60% en masse à des températures comprises entre 10°C et 50°C et à pression atmosphérique, ou comprise entre 1% et 40% en masse à des températures comprises entre 20°C et 80°C.

Les adsorbants de HCl_{(gaz)} sus-listés présentent l'avantage d'être régénérables en vide et en température (VTSA) et de n'entraîner aucune ou très peu de co-adsorptions dues à la présence de Cl_{2(gaz)}, CCl_{4(gaz)}, H_{2(gaz)}, CO_{(gaz)}, O_{2(gaz)} ou CO_{2(gaz)} dans le ciel gazeux à traiter, ce qui permet d'obtenir une pureté jusqu'ici inégalée.

Dans certains modes de réalisation, le gaz de purge issu du piège VTSA à HCl_{(gaz)} est réintroduit dans le mélange gazeux réactif en amont du réacteur et/ou liquéfié dans un liquéfacteur aux fins de stockage, avec une pureté supérieure à 99%, la phase gazeuse issue de ce liquéfacteur étant réintroduite dans le ciel gazeux à traiter à l'entrée du piège VTSA à HCl_{(gaz)}. En d'autres termes, le HCl_{(gaz)} récupéré est soit recyclé en amont du réacteur, soit liquéfié et stocké sous forme liquide, soit pour partie recyclé et pour partie liquéfié et stocké.

Dans certains modes de réalisation, le milieu adsorbant sélectif du piège VTSA à Cl_{2(gaz)} est choisi parmi les matériaux carbonés microporeux (nanotubes de carbone ou carbones dérivés de carbures ou charbons actifs ou autres tamis moléculaires carbonés) et les zéolithes artificielles de type Y, qui ont une taille de pores caractéristique comprise entre 0,3 nm et 0,6 nm, préférablement entre 0,4 nm et 0,5 nm, telle que déterminée par la méthode NLDFT de la théorie fonctionnelle de la densité non locale avec du CO₂ comme molécule sonde à 273 K et avec un modèle géométrique du type fente.

Pour une teneur en Cl_{2(gaz)} de l'ordre de 1% à 70% molaire dans le ciel gazeux à traiter, on choisira de préférence le milieu adsorbant parmi les matériaux poreux susmentionnés qui ont de plus une capacité d'adsorption sélective en Cl_{2(gaz)} comprise entre 0,1% et 60% en masse, de préférence entre 1% et 30% en masse, à des températures comprises entre 10°C et 50°C et à pression atmosphérique, et/ou entre 1% et 40% en masse à des températures comprises entre 20°C et 80°C et à pression atmosphérique.

Ces adsorbants de Cl_{2(gaz)} sont régénérables en vide et en température (VTSA) ; ils sont de plus perméables et résistants aux molécules CO_{2(gaz)}, CO_{(gaz)}, O_{2(gaz)}, H_{2(gaz)} et CCl_{4(gaz)}, de sorte que les phénomènes de co-adsorption dus à la présence de CO_{2(gaz)}, CO_{(gaz)}, O_{2(gaz)}, H_{2(gaz)} et CCl_{4(gaz)} sont négligeables.

Le Cl_{2(gaz)} capturé dans le piège VTSA à Cl_{2(gaz)} et récupéré au niveau de la sortie de purge dudit piège est réintroduit dans le mélange gazeux réactif en amont du réacteur et/ou liquéfié dans un liquéfacteur aux fins de stockage, la phase gazeuse issue de ce liquéfacteur étant réintroduite dans le ciel gazeux à traiter à l'entrée du piège VTSA à Cl_{2(gaz)}. En d'autres termes, le Cl_{2(gaz)} récupéré est soit recyclé en amont du réacteur, soit liquéfié et stocké sous forme liquide, soit pour partie recyclé et pour partie liquéfié et stocké.

Dans certains modes de réalisation, le milieu adsorbant du piège VTSA à CCl_{4(gaz)} est choisi parmi les charbons actifs microporeux, les zéolithes artificielles ou naturelles, les gels de silice et les alumines activées, qui ont une taille de pores caractéristique comprise entre 0,3 nm et 2 nm, telle que déterminée par la méthode NLDFT de la théorie fonctionnelle de la densité non locale avec du CO₂ comme molécule sonde à 273 K et avec un modèle géométrique du type fente.

Pour une teneur en CCl_{4(gaz)} comprise entre 1% et 10% molaire dans le ciel gazeux à traiter, on choisira de préférence le milieu adsorbant parmi les matériaux poreux susmentionnés qui ont de plus une capacité d'adsorption sélective en CCl₄ comprise entre 0,5% et 60% en masse à des températures comprises entre 10°C et 50°C et à pression atmosphérique, ou comprise entre 1% et 40% en masse à des températures comprises entre 20°C et 80°C et à pression atmosphérique.

Les adsorbants de CCl_{4(gaz)} sus-listés présentent l'avantage d'être régénérables en vide et en température (VTSA) et d'entraîner peu de co-adsorptions dues à la présence de CO_{(gaz)}, O_{2(gaz)}, H_{2(gaz)} et CO_{2(gaz)} dans le ciel gazeux à traiter, ce qui permet d'obtenir une pureté jusqu'ici inégalée.

Le CCl_{4(gaz)} gazeux ainsi récupéré à la sortie de purge du piège VTSA à CCl_{4(gaz)} est avantageusement recyclé en amont de la réaction de chloration, c'est-à-dire réintroduit dans le mélange gazeux réactif qui alimente le réacteur. Il peut être liquéfié en grande majorité, à des températures de l'ordre de 10 à 40°C pour être stocké avant d'être recyclé en amont de la réaction de chloration ou d'être utilisé dans d'autres applications.

Dans certains modes de réalisation, qu'il s'agisse d'un procédé par lots ou continu, le ciel gazeux sortant de la première série de piège à composés chlorés ou sortant de l'analyseur (si celui-ci est présent) est envoyé dans une seconde série de pièges à composés non chlorés, lesdits pièges étant là encore de préférence des pièges par adsorption sélective ou éventuellement des catalyseurs. La capture des composés non chlorés permet principalement de récupérer le gaz porteur, qui peut être recyclé, ce qui réduit encore le coût du procédé de synthèse selon l'invention. D'autre part, la capture plus particulièrement du CO_{(gaz)} permet de sécuriser le rejet de gaz à l'évent.

La seconde série de pièges à composés non chlorés comprend par exemple successivement un piège sélectif à O_{2(gaz)}, un piège sélectif à H_{2(gaz)} et un piège sélectif à CO_{(gaz)}/CO_{2(gaz)}.

Dans le cas d'un procédé continu, le piège à CO_{(gaz)}/CO_{2(gaz)} est de préférence un piège de type VTSA (i.e. fonctionnant selon un procédé d'adsorption modulé en vide et en température) dont le milieu adsorbant est choisi parmi les matériaux carbonés poreux (charbons actifs poreux), les zéolithes artificielles de type A, les zéolithes 5A, les gels de silice et les alumines activées, qui ont de préférence une capacité d'adsorption en CO comprise entre 0,1% et 10% en masse, par exemple entre 1% et 10% en masse, à des températures comprises entre 20°C et 80°C à pression atmosphérique et en présence de CO₂.

Pour améliorer la compacité du piège, l'adsorbeur peut contenir deux couches, à savoir une couche de filtrage du CO_{2(gaz)} puis une couche d'arrêt du CO_{(gaz)}.

Le piège VTSA à CO_{(gaz)}/CO_{2(gaz)} est régénéré à l'aide d'un gaz d'élution du type gaz noble ou inerte, propre et sec, comme expliqué pour les pièges VTSA à composés chlorés précédemment décrits.

A la sortie de la seconde série de pièges à composés non chlorés, le ciel gazeux traité est essentiellement, idéalement uniquement, constitué de gaz porteur (noble ou inerte). Celui-ci peut être recyclé. Ainsi, dans le cas d'un procédé par lots, le ciel gazeux traité sortant de la seconde série de pièges à composés non chlorés peut être utilisé comme gaz d'élution pour la régénération des pièges à composés chlorés ou non chlorés. Dans le cas d'un procédé continu, le ciel gazeux traité sortant de la seconde série de pièges à composés non chlorés peut être réintroduit dans le mélange gazeux réactif en amont du réacteur et/ou utilisé comme gaz d'élution pour la régénération de l'un ou plusieurs des pièges VTSA à composés chlorés ou non chlorés, c'est-à-dire pour la régénération du piège VTSA à HCl_{(gaz)} et/ou du piège VTSA à Cl_{2(gaz)} et/ou du piège VTSA à CCl_{4(gaz)} et/ou du piège VTSA à CO_{(gaz)}/CO_{2(gaz)}.

Dans certains modes de réalisation, qu'il s'agisse d'un procédé par lots ou d'un procédé continu, le ciel gazeux récupéré du réacteur est soumis à un prétraitement avant son passage dans la première série de pièges à composés chlorés, lequel prétraitement comprend le passage du ciel gazeux issu du réacteur dans un dispositif de séchage dit sécheur. Ce sécheur permet de pallier une éventuelle pollution du ciel gazeux liée à un dégazage du sel en vapeur d'eau dans le réacteur.

Dans certains modes de réalisation, ledit sécheur est un dispositif du type VTSA, c'est-à-dire un dispositif d'adsorption modulé en vide et en température, comprenant par exemple un desiccant de type zéolithe 3A (adsorbant hydrophile dont les pores ont une taille de l'ordre de 3Å) ou un desiccant de type Drierite^{®}. La zéolithe 3A autorise la capture de HCl_{(gaz)} en faible proportion et retient l'eau en forte proportion, la teneur résiduaire en eau après filtration est inférieure à 100 ppbv. Aussi, l'adsorption compétitive de l'eau permet à terme d'expulser tout le HCl_{(gaz)} retenu dans l'adsorbant. En cas d'utilisation de la Drierite^{®}, la capture de l'eau est plus sélective ; néanmoins la teneur en eau résiduaire en sortie de filtre est plutôt de l'ordre de 1 à 10 ppmv. En résumé, la zéolithe 3A présente l'avantage de ne pas arrêter les composés chlorés en dehors de HCl_{(gaz)} en milieu sec dont la quantité adsorbée reste faible. En outre, par définition, le sécheur a pour vocation l'arrêt de l'eau. Cet adsorbat présente une forte interaction avec la zéolithe 3A ou point d'occuper les sites qui auraient été préalablement occupés par le HCl_{(gaz)}. A saturation en eau dans la zéolithe, la quasi-totalité du HCl_{(gaz)} préalablement retenu a été expulsée de l'adsorbant. Le HCl_{(gaz)} expulsé de l'absorbant au profit de l'eau et les autres composés chlorés non arrêtés par la zéolithe 3A sont ensuite récupérés dans la première série de pièges à composés chlorés. La zéolithe 3A n'arrête pas non plus les composés non chlorés (en dehors de l'eau) qui sont analysés ensuite dans l'analyseur. La Drierite^{®} est plus sélective mais laisse passer quelques ppmv d'eau dans le gaz sortant du sécheur. Ces deux solutions sont cependant satisfaisantes pour l'application d'intérêt.

Les conditions de régénération du sécheur sont comparables aux conditions de régénération des pièges VTSA précédents. Ainsi par exemple, le sécheur peut être régénéré à une température comprise entre 100°C et 450°C, et préférablement entre 150°C et 250°C, sous vide à une pression comprise 0,001 mbara et 900mbara, et ce avec un balayage au moyen d'un gaz noble ou inerte, propre et sec, ayant un point de rosé inférieur à -80°C, de préférence inférieur à -100°C.

Dans certains modes de réalisation, à titre de sécurité supplémentaire (ou en l'absence de piège à CO_{(gaz)}/CO_{2(gaz)} dans l'installation), afin d'éliminer tout risque toxique notamment en cas de rejet de gaz à l'extérieur, le procédé de synthèse selon l'invention comprend une étape supplémentaire d'élimination du monoxyde de carbone contenu dans le ciel gazeux traité sortant de la seconde série de pièges à composés non chlorés ou, en l'absence de seconde série de pièges à composés non chlorés, sortant de l'analyseur ou, en l'absence d'analyseur, sortant de la première série de pièges à composés chlorés.

Cette étape peut être réalisée par transformation (oxydation) du CO_{(gaz)} en CO_{2(gaz)} à l'aide d'une base CuO dans le cadre d'un procédé par lots. En fonctionnement continu, on peut utiliser un piège à monoxyde de carbone du type piège VTSA dont le milieu adsorbant est une zéolithe 5A. En variante, le CO_{2(gaz)} est tout simplement torché.

Enfin, si le ciel gazeux récupéré du réacteur contient du dihydrogène, la seconde série de pièges à composés non chlorés comprend de préférence un piège sélectif à H_{2(gaz)}, qui peut comprendre un catalyseur base palladium ou bien une base MnO₂ couplée à un agent séchant.

L'invention concerne également une installation de synthèse d'un sel combustible nucléaire caractérisée en ce qu'elle est configurée pour mettre en oeuvre le procédé de synthèse précédemment décrit.

L'invention concerne donc, en particulier, une installation de synthèse d'un sel combustible nucléaire par chloration au moyen d'un agent chlorant enrichi en ³⁷Cl, la chloration portant sur au moins un oxyde métallique solide MₓO_{y(solide} où M est choisi parmi le plutonium (Pu), l'uranium (U), le magnésium (Mg), l'américium (Am), le thorium (Th) et le curium (Cm), l'aluminium (Al) et le sodium (Na), l'un au moins desdits oxydes métalliques solides contenant un élément fissile, l'installation comprenant un réacteur contenant un milieu réactionnel triphasique ou diphasique qui comprend le ou les oxydes métalliques solides MₓO_{y(solide)}, un sel liquide dans le cas spécifique du milieu réactionnel triphasique et un mélange gazeux réactif comprenant ledit agent chlorant enrichi et un gaz porteur choisi parmi les gaz nobles et les gaz inertes, la réaction de chloration produisant au moins un chlorure métallique MᵤClᵥ formant le sel combustible nucléaire, lequel chlorure métallique apparaît à l'état liquide ou solide au sein du réacteur dans le cas d'un milieu réactionnel diphasique ou en solution dans le sel liquide introduit dans le réacteur dans le cas d'un milieu réactionnel triphasique, ainsi qu'un ciel gazeux contenant un ou des composés chlorés et des composés non chlorés.

L'installation de synthèse de sel combustible nucléaire selon l'invention est caractérisée en ce que :
- le réacteur comprend une sortie gaz par laquelle le ciel gazeux de la réaction de chloration est récupéré,
- l'installation comprend, en sortie du réacteur, une première série de pièges à composés chlorés fonctionnant par adsorption sélective, chacun desdits pièges à composés chlorés comprenant un adsorbant sélectif configuré pour capturer de façon sélective un -et de préférence un seul- composé chloré à l'exclusion des composés non chlorés présents dans ledit ciel gazeux.

Dans certains modes de réalisation, l'installation de synthèse comprend de plus :
- un système de contrôle prévu pour surveiller et piloter la réaction de chloration,
- en aval de la première série de pièges à composés chlorés, un analyseur, qui est relié audit système de contrôle et dans lequel est introduit le ciel gazeux traité sortant de la première série de pièges à composés chlorés, ledit analyseur étant configuré pour mesurer au moins une caractéristique d'au moins l'un des composés non chlorés issus de la réaction de chloration,
- de façon optionnelle, en aval dudit analyseur, une seconde série de pièges à composés non chlorés, chacun desdits pièges à composés non chlorés étant configuré pour capturer au moins l'un des composés gazeux non chlorés (CO_{(gaz)}, CO_{2(gaz)}, O_{2(gaz)}, H_{2(gaz)}) présents dans le ciel gazeux de la réaction de chloration.

Dans certains modes de réalisation, l'installation est configurée pour mettre en oeuvre un milieu réactionnel triphasique et pour fonctionner de façon continue, et :
- l'agent chlorant enrichi comprend du dichlore gazeux (Cl_{2(gaz)}) enrichi en ³⁷Cl et/ou du tétrachlorométhane gazeux (CCl_{4(gaz)}) enrichi en ³⁷Cl et/ou du chlorure d'hydrogène (HCl_{(gaz)}) enrichi en ³⁷Cl, la réaction de chloration suivant le schéma réactionnel

   **a** CCl_{4(gaz)} + **b** Cl_{2(gaz)} + **c** HCl_{(gaz)} + **d** MₓO_{y(solide)} **=> e** MᵤClᵥ₍ₛₒₗᵤₜᵢₒₙ₎ **+f** Cl_{2(gaz)} + **g** HCl_{(gaz)} **+h** CO_{(gaz)} + **i** CO_{2(gaz)} + **j** O_{2(gaz)} + **k** H_{2(gaz)} + **l** H₂O_{(gaz)},
- le sel liquide est du chlorure de sodium NaCl_{(liquide)},
la première série de pièges à composés chlorés comprend, successivement et dans cet ordre, un piège VTSA à HCl_{(gaz)} sélectif, puis un piège VTSA à Cl_{2(gaz)} sélectif puis, de façon optionnelle, un piège VTSA à CCl_{4(gaz)} et, lesdits pièges VTSA étant modulés en vide et en température et comprenant chacun quatre colonnes d'adsorption contenant un milieu adsorbant sélectif pour le composé chloré cible (HCl_{(gaz)}, Cl_{2(gaz)} ou CCl_{4(gaz)}), une entrée d'alimentation pour l'introduction du ciel gazeux à traiter, une sortie de production d'où sort le ciel gazeux traité, une entrée d'élution pour l'introduction d'un gaz d'élution pour la régénération du milieu adsorbant, et une sortie de purge pour la récupération d'un gaz de purge riche en composé chloré piégé élué, le milieu adsorbant étant choisi parmi des milieux poreux aptes à adsorber le composé chloré cible et qui sont perméables et résistants au gaz de fond constitué de gaz porteur, de dioxygène (O_{2(gaz)}), de dihydrogène (H_{2(gaz)}), de monoxyde de carbone (CO_{(gaz)}) et de dioxyde de carbone (CO_{2(gaz)}), les quatre colonnes du piège VTSA fonctionnant en alternance pour capturer et rejeter sélectivement le composé chloré cible (HCl_{(gaz)} ou Cl_{2(gaz)} ou CCl_{4(gaz)}) selon un schéma de fonctionnement continu comprenant douze étapes avec six phases distinctes : adsorption, purge sous vide, purge sous vide chauffé, élution sous vide chauffé, refroidissement et pressurisation,
- la seconde série de pièges à composés non chlorés comprend un piège à O_{2(gaz)}, un piège à H_{2(gaz)} et un piège à CO_{(gaz)}/CO_{2(gaz)}, le piège à CO_{(gaz)}/CO_{2(gaz)} étant un piège VTSA dont le milieu adsorbant est choisi parmi les matériaux carbonés poreux, les zéolithes artificielles ou naturelles de type A, les zéolithes 5A, les gels de silice et les alumines activées aptes à arrêter le CO_{(gaz)}/CO_{2(gaz)}, qui ont de préférence une capacité d'adsorption en CO_{(gaz)} comprise entre 0,1% et 10% en masse à des températures comprises entre 20°C et 80°C, à pression atmosphérique et en présence de CO_{2(gaz)},
- l'installation comprend un compteur de gaz volumétrique agencé immédiatement en amont de l'analyseur, relié au système de contrôle et équipé d'un émetteur à impulsion instrumenté en pression et en température,
- l'installation comprend un contacteur, saturé en agent chlorant enrichi et dans lequel est formé le mélange gazeux réactif, lequel contacteur comprend une entrée en gaz porteur, un capteur de température et un système de chauffage,
- l'installation comprend un contrôleur de débit (506) agencé immédiatement en amont de l'entrée en gaz porteur du contacteur,
- le réacteur est un réacteur-mélangeur comprenant un capteur de température, un système de chauffage et un système d'agitation,
- le système de contrôle est configuré pour
   -- collecter les mesures de température des capteurs de température du contacteur et du réacteur,
   -- piloter en temps réel le système de chauffage du contacteur afin de réguler en temps réel la température du mélange gazeux réactif injecté dans le milieu réactionnel,
   -- réguler en temps réel le débit du mélange gazeux réactif introduit dans le réacteur par pilotage du débit de gaz porteur introduit dans le contacteur,
   -- calculer en temps réel la température du milieu réactionnel, les débits molaires en CO_{(gaz)} et/ou CO_{2(gaz)} et/ou O_{2(gaz)} et/ou H_{2(gaz)} produits par la réaction de chloration, ainsi que l'avancement et la vitesse de la réaction de chloration,
   -- réguler en temps réel la température du milieu réactionnel par pilotage des systèmes de chauffage et d'agitation du réacteur et du système de chauffage du contacteur, et éventuellement aussi par pilotage du débit de gaz porteur introduit dans le contacteur (l'installation comprenant alors un contrôleur de débit à l'entrée en gaz porteur du contacteur),
   -- et réguler en temps réel le débit du sel liquide injecté dans le milieu réactionnel et le débit d'oxyde(s) métallique(s) solide(s) injecté(s) dans le milieu réactionnel ou introduit(s) dans le sel liquide.

Diverses caractéristiques additionnelles de cette installation seront plus précisément décrites en référence aux dessins annexées.

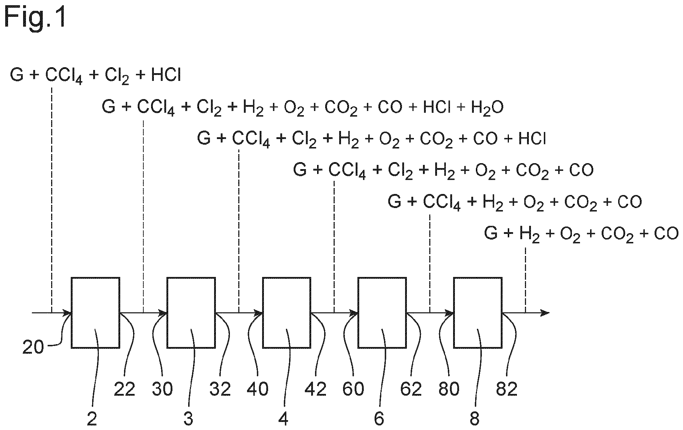

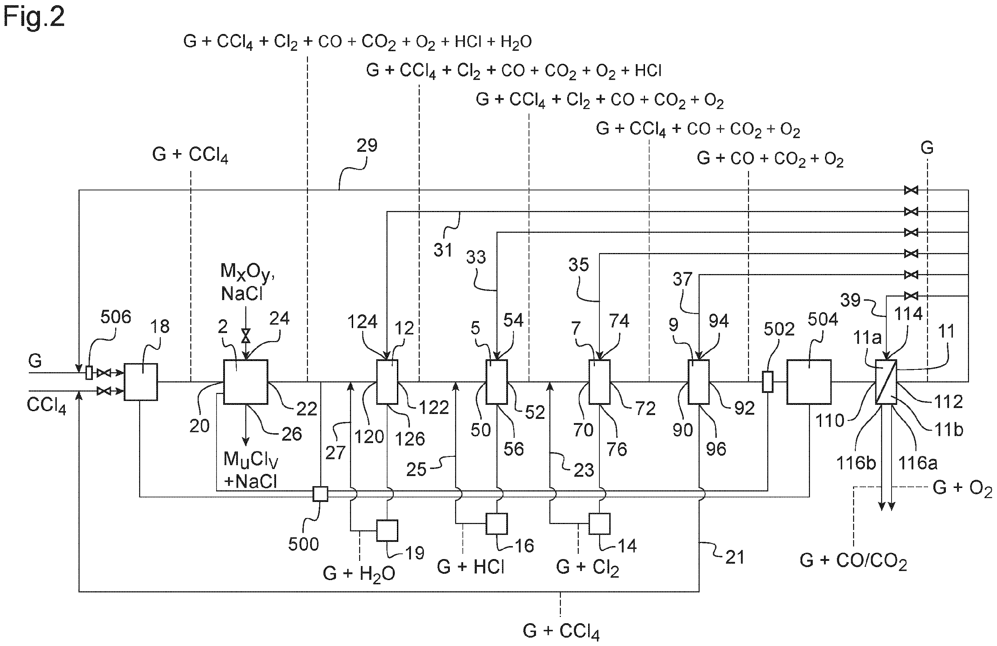

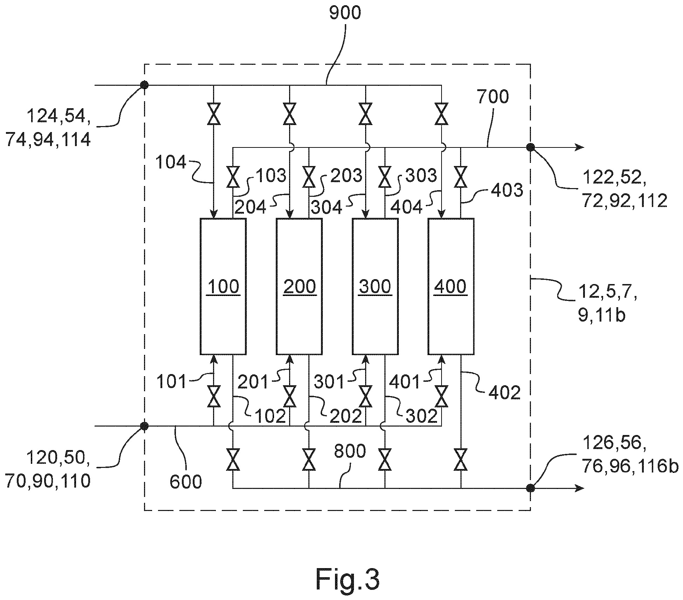

L'invention, selon des exemples de réalisation, sera bien comprise et ses avantages apparaitront mieux à la lecture de la description détaillée qui suit, donnée à titre indicatif et nullement limitatif, en référence aux dessins annexés dans lesquels :
∘ la figure 1 représente de façon schématique un premier exemple d'installation de synthèse de sel combustible nucléaire selon l'invention fonctionnant en production par lots ;
∘ la figure 2 représente de façon schématique un deuxième exemple d'installation de synthèse de sel combustible nucléaire selon l'invention fonctionnant en production continue ;
∘ la figure 3 représente de façon schématique un piège ou dispositif de filtrage du type VTSA à quatre colonnes d'adsorption.

Les éléments identiques représentés sur les figures précitées sont identifiés par des références numériques identiques.

Dans toute la description, les expressions « un oxyde métallique » et « l'oxyde métallique » désignent l'ensemble des oxydes métalliques impliqués dans la réaction de chloration ; il peut donc s'agir d'un seul oxyde métallique fissile ou d'un mélange de plusieurs oxydes métalliques dont l'un au moins comprend un élément fissile.

La figure 1 représente un premier exemple d'installation de synthèse de sel combustible nucléaire par chloration selon l'invention, pour la mise en oeuvre d'un procédé de synthèse selon l'invention fonctionnant en production par lots.

L'installation comprend un réacteur 2, en l'occurrence un réacteur-mélangeur dans lequel se déroule la réaction de chloration (ici triphasique) qui conduit à l'obtention du sel combustible nucléaire. Ce réacteur présente une entrée gaz 20 par laquelle un mélange gazeux réactif est introduit dans le réacteur, et une sortie gaz 22 par laquelle est récupéré le ciel gazeux qui se forme durant la réaction de chloration.

Le réacteur comprend aussi une entrée liquide/solide (non représentée) par laquelle un sel liquide, de préférence du chlorure de sodium NaCl_{(liquide)}, et un oxyde métallique solide MₓO_{y(solide)} sont introduits dans le réacteur en début de production d'un lot. L'oxyde métallique solide peut être introduit dans le réacteur indépendamment du sel liquide via une autre entrée (non représentée) ou via l'entrée liquide/solide susmentionnée, ou être préalablement mélangé au sel liquide et entraîné par celui-ci à l'intérieur du réacteur via l'entrée liquide/solide. En fin de production du lot, le sel combustible obtenu est extrait du réacteur par une sortie liquide/solide (non représentée) ou par l'entrée liquide/solide susmentionnée.

Le réacteur 2 comprend de plus un système d'agitation (non représenté) pour le mélange du milieu réactionnel et un système de chauffage (non représenté) pour le chauffage du milieu réactionnel.

Le mélange gazeux réactif, qui est introduit dans le réacteur via l'entrée gaz 20, comprend un gaz porteur (noté G sur les dessins annexés), noble (Ar, He, etc.) ou inerte (N₂), propre et sec, et un agent chlorant enrichi en ³⁷Cl qui, en l'exemple, comprend du CCl_{4(gaz)}, du Cl_{2(gaz)}et du HCl_{(gaz)}).

La réaction de chloration répond à l'équation :

**a** CCl_{4(gaz)} + **b** Cl_{2(gaz)} + **c** HCl_{(gaz)} + **d** MₓO_{y(solide)} => **e** MᵤClᵥ₍ₛₒₗᵤₜᵢₒₙ₎ + **f** Cl_{2(gaz)} + **g** HCl_{(gaz)} **+h** CO_{(gaz)} + **i** CO_{2(gaz)} + **j** O_{2(gaz)} + **k** H_{2(gaz)} + **l** H₂O_{(gaz)}

Le ciel gazeux extrait du réacteur par la sortie gaz 22 comprend par conséquent des molécules de gaz porteur G, de CCl_{4(gaz)} n'ayant pas réagi, de Cl_{2(gaz)}, de HCl_{(gaz)} n'ayant pas réagi ou issu de la réaction secondaire spontanée de Cl_{2(gaz)} avec H_{2(gaz)}, de O_{2(gaz)}, de CO_{(gaz)}, de CO_{2(gaz)}, de H₂O_{(gaz)} et de H_{2(gaz)}.

Selon l'invention, l'installation de synthèse comprend, en aval du réacteur 2, une première série de pièges à composés chlorés par adsorption sélective, comprenant ici successivement un piège sélectif à HCl_{(gaz)} 4, un piège sélectif à Cl_{2(gaz)} 6 et un piège sélectif à CCl_{4(gaz)} 8.

Elle comprend de plus avantageusement un sécheur 3 en sortie du réacteur 2, c'est-à-dire entre la sortie gaz 22 dudit réacteur et l'entrée gaz 40 du piège sélectif à HCl_{(gaz)}. Le séchage du ciel gazeux sortant du réacteur 2 permet d'éviter une potentielle réaction entre HCl_{(gaz)} et CCl_{4(gaz)}.

Chacun des pièges à composés chlorés 4, 6, 8, de même que le sécheur 3, peut prendre la forme d'une colonne cylindrique dotée d'une entrée gaz 30, 40, 60, 80 et d'une sortie gaz 32, 42, 62, 82 et contenant un média adsorbant permettant la capture sélective de H₂O_{(gaz)}, HCl_{(gaz)}, Cl_{2(gaz)} ou CCl_{4(gaz)} respectivement. Le piège peut fonctionner à température ambiante (de 10°C à 40°C) ou à froid (de -40°C à 10°C) ou à chaud (de 40°C à 80°C) et ce, sous pression (de 1,1 à 10 bara) ou à pression atmosphérique ou sous vide (de 0,1 à 0,9 bara).

Le sécheur 3 est configuré pour retenir la vapeur d'eau présente dans le ciel gazeux récupéré à la sortie gaz 22 du réacteur, ce ciel gazeux comprenant des molécules de G, H₂O_{(gaz)}, HCl_{(gaz)} , Cl_{2(gaz)}, CCl_{4(gaz)}, O_{2(gaz)}, CO_{(gaz)}, CO_{2(gaz)} et H_{2(gaz)}. Le média adsorbant dudit sécheur 3 peut être une zéolithe 3A ou une driérite^{®} (produits dessicatifs commercialisés par la compagnie W.A.Hammond Drierite Co Ltd).

Le piège sélectif à HCl_{(gaz)} 4 est configuré pour arrêter de façon sélective et efficace le HCl_{(gaz)} présent dans le ciel gazeux traité sortant de la sortie gaz 32 du sécheur, ce ciel gazeux comprenant des molécules de G, HCl_{(gaz)}, Cl_{2(gaz)}, CCl_{4(gaz)}, O_{2(gaz)}, CO_{(gaz)}, CO_{2(gaz)} et H_{2(gaz)}. Le média adsorbant dudit piège sélectif à HCl_{(gaz)} peut être un tamis moléculaire carboné, par exemple un tamis moléculaire à base d'un carbure dérivé de carbone ou à base de nanotubes de carbone, dont la taille de pores caractéristique est comprise entre 3Å et 4Å, mesurée selon la méthode NLDFT comme indiqué plus haut.

Le piège sélectif à Cl_{2(gaz)} 6 est configuré pour arrêter de façon sélective et efficace le Cl_{2(gaz)} présent dans le ciel gazeux traité sortant de la sortie gaz 42 du piège sélectif à HCl_{(gaz)}, ce ciel gazeux comprenant des molécules de gaz porteur G, Cl_{2(gaz)}, CCl_{4(gaz)}, O_{2(gaz)}, CO_{(gaz)}, CO_{2(gaz)} et H_{2(gaz)}. Le média adsorbant dudit piège sélectif à Cl_{2(gaz)} 6 peut être un tamis moléculaire carboné, par exemple un tamis moléculaire à base d'un carbure dérivé de carbone ou à base de nanotubes, dont la taille de pores caractéristique est de l'ordre de 5Å, mesurée selon la méthode NLDFT comme indiqué plus haut.

Le piège à CCl_{4(gaz)} 8 est configuré pour arrêter de façon efficace le CCl_{4(gaz)} présent dans le ciel gazeux traité sortant de la sortie gaz 62 du piège sélectif à Cl_{2(gaz)}, ce ciel gazeux comprenant des molécules de G, CCl_{4(gaz)}, O_{2(gaz)}, CO_{(gaz)}, CO_{2(gaz)} et H_{2(gaz)}. Le média adsorbant dudit piège à CCl_{4(gaz)} 8 peut être un charbon actif microporeux (c'est-à-dire dont la taille des pores est inférieure à 2nm) usuel.

En fin de réaction, chaque piège à composé chloré 4, 6, 8 est déconnecté du montage et l'extraction du composé chloré piégé est obtenue en connectant une pompe à vide à la sortie gaz 42, 62, 82 dudit piège pour réaliser un vide primaire dans le piège, à une pression comprise entre 900 mbara et 0,001 mbara, en chauffant le système {piège + composé chloré piégé} entre 35°C et 200°C, éventuellement jusqu'à 450°C, et en éluant le système par balayage du média adsorbant poreux au moyen d'un gaz d'élution noble (He, Ar ...) ou inerte (N₂), propre et sec, introduit dans le piège via l'entrée gaz 40, 60, 80 du piège.

En sortie de la pompe à vide, le gaz d'élution chargé en composé chloré est refroidi pour condenser ou solidifier le composé chloré élué (HCl ou Cl₂ ou CCl₄). La régénération est ainsi réalisée pour chacun des pièges à composés chlorés 4 et 6 et 8. Une fois déconnectée du piège, la pompe à vide peut aussi être balayée en gaz d'élution pour refroidir le gaz désorbé et diluer la teneur en chlore afin d'améliorer la durée de vie de la machine tournante.

Le refroidissement du CCl_{4(gaz)} désorbé et refoulé en sortie de pompe à vide est alors possible à température ambiante ou froide entre -20°C et 10°C pour récolter le CCl₄ pur sous forme liquide ou bien entre -30°C et -23°C pour récolter le CCl₄ pur sous forme solide.

Le Cl₂ pur peut être récolté sous forme liquide après refroidissement à -34°C à pression atmosphérique ou après compression jusqu'à 6 bar à température ambiante.

Le HCl pur peut être récolté sous forme liquide après refroidissement à -90°C à pression atmosphérique ou après compression jusqu'à 70 - 90 bara à température ambiante.

Les composés chlorés récupérés peuvent être réutilisés ultérieurement, pour la production d'un autre lot après avoir été retransformés en gaz, ou pour tout autre application.

La figure 2 représente un second exemple d'installation de synthèse de sel combustible nucléaire par chloration selon l'invention pour la production de sel combustible en continu à partir de l'agent chlorant CCl_{4(gaz)}.

L'installation comprend un réacteur 2. Là encore, il s'agit d'un réacteur-mélangeur, accueillant un milieu réactionnel triphasique ; mais il pourrait aussi s'agir d'un réacteur solide-gaz pour une synthèse du sel combustible par la voie diphasique.

Le réacteur 2 est doté d'une entrée gaz 20, d'une sortie gaz 22, d'une entrée liquide/solide 24, d'une sortie liquide/solide 26, d'un système d'agitation (non représenté), d'un système de chauffage (non représenté) et d'un capteur de température (non représenté).

Le réacteur 2 est surveillé et piloté par un système de contrôle 500, auquel est relié un analyseur 504 décrit plus loin et un compteur volumétrique 502 positionné immédiatement en amont de l'analyseur 504. Le système de contrôle 500 est par ailleurs connecté au système d'agitation, au système de chauffage et au capteur de température du réacteur 2, et à la ou aux vannes de l'entrée liquide/solide 24 du réacteur aux fins de contrôle du débit du sel liquide injecté dans le milieu réactionnel et du débit d'oxyde(s) métallique(s) solide(s) injecté(s) dans le milieu réactionnel ou introduit(s) dans le sel liquide.

En amont du réacteur 2, l'installation de synthèse comprend un contacteur de CCl_{4(gaz)} 18, dans lequel est préparé le mélange gazeux réactif, à une température comprise entre 20°C et 60°C. A cette fin, le contacteur 18 comprend un système de chauffage (non représenté) et un capteur de température (non représenté). Le contacteur est par ailleurs doté de deux entrées gaz, une entrée en gaz porteur G (gaz noble ou inerte, propre et sec), et une entrée en agent chlorant enrichi, c'est-à-dire ici en CCl_{4(gaz)}.

Dans cet exemple non limitatif, l'agent chlorant enrichi est du CCl_{4(gaz)} Bien entendu, en variante, l'agent chlorant enrichi -et par conséquent le mélange gazeux réactif- pourrait aussi comprendre du Cl_{2(gaz)} et/ou du HCl_{(gaz)} ou un autre gaz chloré enrichi en ³⁷Cl.

Le système de contrôle 500 est connecté au contacteur 18, en particulier au capteur de température et au système de chauffage dudit contacteur, pour le contrôle de la température du CCl₄ à l'équilibre liquide/vapeur.

L'installation comprend de plus un contrôleur de débit 506 agencé immédiatement en amont de l'entrée en gaz porteur du contacteur 18 et relié au contrôleur 500, pour la régulation du débit d'injection de gaz noble dans le contacteur 18, lequel contacteur est par ailleurs saturé en CCl_{4(gaz)}. Associé au contrôleur de débit 506, le contrôleur 500 permet donc in fine de maîtriser l'apport en agent chlorant dans le milieu réactionnel.

Selon l'invention, en aval de la sortie gaz 22 du réacteur, par laquelle le ciel gazeux de la réaction de chloration est extrait du réacteur, l'installation comprend une première série de pièges à composés chlorés.

Cette première série de pièges à composés chlorés comprend un piège VTSA sélectif à HCl_{(gaz)} 5, configuré pour capturer (de façon sélective) et désorber en continu le HCl_{(gaz)}, selon un procédé modulé en vide et en température, puis un piège VTSA sélectif à Cl_{2(gaz)} 7, configuré pour capturer (de façon sélective) et désorber en continu le Cl_{2(gaz)} selon un procédé modulé en vide et en température, et enfin un piège VTSA à CCl_{4(gaz)} 9, configuré pour capturer et désorber en continu le CCl_{4(gaz)} selon un procédé modulé en vide et en température.

Chaque piège VTSA à composé chloré 5, 7, 9 comprend :
- au moins deux, de préférence quatre, colonnes d'adsorption, chacune des colonnes d'adsorption contenant un milieu poreux adsorbant sélectif apte à piéger le composé chloré cible (HCl_{(gaz)} pour le piège 5, Cl_{2(gaz)} pour le piège 7 et CCl_{4(gaz)} pour le piège 9),
- une entrée gaz 50, 70, 90 dite entrée d'alimentation, par laquelle le ciel gazeux à traiter est introduit dans ledit piège pour être conduit alternativement dans l'une ou l'autre des colonnes d'adsorption,
- une sortie gaz 52, 72, 92 dite sortie de production, par laquelle le ciel gazeux traité issu des colonnes d'adsorption sort dudit piège,
- une entrée d'élution 54, 74, 94, par laquelle un gaz d'élution est introduit dans le piège pour être conduit alternativement dans l'une ou l'autre des colonnes d'adsorption de façon à balayer le milieu adsorbant sélectif que ladite colonne contient, aux fins de désorption du composé chloré piégé,
- une sortie de purge 56, 76, 96, par laquelle le composé chloré désorbé entraîné par le gaz d'élution est évacué.

L'installation illustrée à la figure 2 comprend de plus un sécheur 12, agencé entre le réacteur 2 et la première série de pièges à composées chlorés, et fonctionnant selon un procédé VTSA.

A l'instar des pièges VTSA à composés chlorés 5, 7, 9, le sécheur 12 comprend de préférence quatre colonnes d'adsorption, une entrée d'alimentation 120 par laquelle le ciel gazeux à sécher est introduit dans le sécheur pour être conduit alternativement dans l'une ou l'autre des colonnes d'adsorption, une sortie de production 122 par laquelle le ciel gazeux séché issu des colonnes d'adsorption sort du sécheur, une entrée d'élution 124 par laquelle un gaz d'élution est introduit dans le piège pour être conduit alternativement dans l'une ou l'autre des colonnes d'adsorption de façon à balayer le milieu adsorbant sélectif que ladite colonne contient, aux fins de désorption de l'eau piégée, et une sortie de purge 126, par laquelle l'eau entraînée par le gaz d'élution est évacuée.

Le fonctionnement continu, modulé en vide et en température, des pièges VTSA à composés chlorés 5, 7 et 9 et du sécheur 12 sera détaillé plus loin en référence à la figure 3.

Dans l'exemple illustré, le CCl_{4(gaz)} non consommé par la réaction de chloration et présent dans le ciel gazeux récupéré du réacteur est directement recyclé. Le gaz de purge issu du piège VTSA à CCl_{4(gaz)} 9, constitué de gaz d'élution G (gaz noble ou inerte) et de CCl_{4(gaz)}, est renvoyé dans le contacteur à CCl_{4(gaz)} 18 par un premier conduit de recyclage 21.

L'installation de synthèse de sel combustible nucléaire de la figure 2 comprend de plus un liquéfacteur de Cl_{2(gaz)} 14 connecté à la sortie de purge 76 du piège VTSA à Cl_{2(gaz)}. Ce liquéfacteur de Cl_{2(gaz)} 14 est configuré pour liquéfier, par refroidissement et/ou par compression, et pour stocker le Cl_{2(gaz)} contenu dans le gaz de purge issu du piège VTSA à Cl_{2(gaz)} 7, lequel gaz de purge est constitué de gaz d'élution G (gaz noble ou inerte) et de Cl_{2(gaz)}. Le gaz restant à l'issu de cette liquéfaction, essentiellement constitué de gaz d'élution G avec éventuellement du Cl₂ gazeux non liquéfié, est renvoyé dans le circuit entre la sortie gaz 52 du piège VTSA à HCl_{(gaz)} et l'entrée gaz 70 du piège VTSA à Cl_{2(gaz)} par un deuxième conduit de recyclage 23, afin de récupérer tout le Cl_{2(gaz)} issu de la réaction de chloration.

L'installation de synthèse de sel combustible nucléaire de la figure 2 comprend de plus un liquéfacteur de HCl_{(gaz)} 16. Ce liquéfacteur est configuré pour liquéfier, par refroidissement et/ou par compression, et pour stocker le HCl_{(gaz)} contenu dans le gaz de purge issu du piège VTSA à HCl_{(gaz)} 5, lequel gaz de purge est constitué de gaz d'élution G (gaz noble ou inerte) et de HCl_{(gaz)}. Le gaz restant à l'issu de cette liquéfaction, essentiellement constitué de gaz d'élution G avec éventuellement du HCl_{(gaz)} gazeux non liquéfié, est renvoyé dans le circuit entre la sortie gaz 32 du sécheur et l'entrée gaz 50 du piège VTSA à HCl_{(gaz)} par un troisième conduit de recyclage 25, afin de récupérer tout le HCl_{(gaz)} issu de la réaction de chloration.

L'installation de synthèse de sel combustible nucléaire de la figure 2 comprend de plus un liquéfacteur de H₂O_{(gaz)} 19 connecté à la sortie de purge 126 du piège VTSA à H₂O_{(gaz)} (sécheur 12). Ce liquéfacteur de H₂O_{(gaz)} 19 est configuré pour liquéfier, par refroidissement, et pour stocker la vapeur d'eau contenue dans le gaz de purge issu du piège VTSA à H₂O_{(gaz)}, lequel gaz de purge est constitué de gaz d'élution G et de H₂O_{(gaz)}. Le gaz restant à l'issu de cette liquéfaction, essentiellement constitué de gaz d'élution G avec éventuellement du H₂O gazeux non liquéfié, est renvoyé dans le circuit entre la sortie gaz 22 du réacteur et l'entrée gaz 120 du piège VTSA à H₂O_{(gaz)} par un quatrième conduit de recyclage 27, afin de récupérer in fine tout le gaz porteur G utilisé initialement pour véhiculer l'agent chlorant enrichi..

Afin d'optimiser la réaction de chloration, l'installation de synthèse de la figure 2 comprend de plus, en aval de la première série de pièges à composés chlorés 5, 7, 9, un analyseur 504 dans lequel sont mesurées et/ou calculées certaines caractéristiques du ciel gazeux traité sortant de la première série de pièges à composés chlorés, dont la concentration en O_{2(gaz)} et/ou H_{2(gaz)} et/ou CO_{(gaz)} et/ou CO_{2(gaz)} dudit ciel gazeux. A cet analyseur est associé un compteur volumétrique 502 agencé à l'entrée de l'analyseur. L'analyseur 504 et le compteur volumétrique 502 sont bien entendu reliés au contrôleur 500, auquel ils transmettent les mesures et autres données générées.

L'installation de synthèse de la figure 2 comprend de plus une seconde série de pièges à composés non chlorés 11, qui comprend un piège à dioxygène 11a (non représenté en détail) et un piège VTSA à CO_{(gaz)}/CO_{2(gaz)}11b (voir aussi Fig. 3). Cette seconde série de pièges à composés non chlorés 11 comprend une entrée gaz 110 pour son alimentation en ciel gazeux à traiter, une sortie gaz 112 par laquelle le ciel gazeux traité sort, une entrée d'élution 114 par laquelle un gaz d'élution est introduit dans le piège pour être conduit soit dans le piège à O_{2(gaz)} 11a soit alternativement dans l'une ou l'autre des colonnes d'adsorption du piège VTSA à CO_{(gaz)}/CO_{2(gaz)} 11b, une sortie de purge 116a par laquelle est récupéré le O_{2(gaz)} capté dans le piège 11a et une sortie de purge 116b par laquelle est récupéré le CO_{(gaz)}/CO_{2(gaz)} désorbé du piège VTSA à CO_{(gaz)}/CO_{2(gaz)}.

La seconde série de pièges à composés non chlorés 11 peut aussi comprendre un piège à H_{2(gaz)} (non référencé) tel qu'un catalyseur palladium. En variante, la capture d'H_{2(gaz)} peut être gérée en faisant réagir le H_{2(gaz)} avec MnO_{2(solide)} ou NiO_{2(solide)} par exemple ; cela génère de l'eau que l'on peut capturer par adsorption avec un média du type zéolithe. Dans ce cas, les quantités résiduaires du O_{2(gaz)} produit par la réaction de chloration sont captées par la suite par exemple au moyen d'un piège à adsorption chimique.

Le ciel gazeux à traiter qui alimente l'entrée gaz 110 de la seconde série de pièges à composés non chlorés 11 a été précédemment débarrassé des composés chlorés HCl_{(gaz)}, CCl_{4(gaz)} et Cl_{2(gaz)}, de sorte qu'il est composé de G (gaz porteur), CO_{(gaz)}, CO_{2(gaz)}, O_{2(gaz)} et H_{2(gaz)}.

A la sortie gaz 112, le ciel gazeux traité sortant ne contient plus que du gaz porteur G pur, qui peut être recyclé. Il peut ainsi être renvoyé à l'entrée en gaz porteur du contacteur de CCl₄ 18, plus précisément immédiatement en amont du contrôleur de débit 506, via un cinquième conduit de recyclage 29, et/ou à l'entrée d'élution 124 du piège VTSA à H₂O_{(gaz)} via un sixième conduit de recyclage 31, et/ou à l'entrée d'élution 54 du piège VTSA à HCl_{(gaz)} via un septième conduit de recyclage 33 et/ou à l'entrée d'élution 74 du piège VTSA à Cl_{2(gaz)} via un huitième conduit de recyclage 35, et/ou à l'entrée d'élution 94 du piège VTSA CCl_{4(gaz)} via un neuvième conduit de recyclage 37 et/ou à l'entrée d'élution 114 du piège VTSA à CO/CO₂, via un dixième conduit de recyclage 39.

Le CO_{(gaz)}/H_{2(gaz)}/O_{2(gaz)}/CO_{2(gaz)} produit par la réaction de chloration est analysé dans l'analyseur 504 afin d'optimiser la réaction de chloration. Les données fournies par le compteur volumétrique 502 et l'analyseur 504, ainsi que par le capteur de température du contacteur de CCl₄ 18, permettent au système de contrôle 500 de calculer notamment :
- la température du milieu réactionnel (celle-ci est aussi fournie par le capteur de température du réacteur),
- les débits molaires en CO_{(gaz)}, H_{2(gaz)} CO_{2(gaz)} et O_{2(gaz)} sortant du réacteur,
- l'avancement de la réaction de chloration, calculé à partir de ces débits molaires, connaissant le débit d'injection en mélange gazeux réactif dans le réacteur et la teneur en agent chlorant enrichi dudit mélange gazeux réactif.

L'analyse des gaz permet le suivi en temps réel de la réaction de chloration et la régulation du débit de réactif pour maximiser le débit de production de sel combustible (formé par le MᵤClᵥ en solution dans du NaCl liquide) ; la réaction étant exothermique, la régulation en température du réacteur est également améliorée par ce système.

Bien que cela n'ait pas été décrit pour le premier exemple de réalisation illustré à la figure 1, dans le cas d'une production par lots, une installation de synthèse selon l'invention peut aussi comprendre un analyseur tel que l'analyseur 504, de même qu'une seconde série (non représentée) de pièges à composés non chlorés.

La capture des composés chlorés selon l'invention permet essentiellement d'éliminer la contrainte imposée au réacteur-mélangeur triphasique en termes de rendement de réaction et d'agitation. En effet, compte tenu des productions de sel combustible attendues, il est souhaitable que la réaction puisse permettre une production intensive ce qui sous-entend que la réaction doit être rapide dans un réacteur compact. Dans une production par lots, un rendement maximisé permet d'envisager une perte nulle en composés enrichis en chlore mais nécessite un retour d'expérience important sur la réaction de chloration et le design du réacteur. En fonctionnement continu, il est admis qu'un taux d'avancement de réaction de 100% n'est pas l'optimum pour maximiser le débit de production de sel combustible. Dans les deux cas, la capture des composés chlorés et les informations fournies par l'analyse des composés non chlorés (en particulier CO_{(gaz)}/H_{2(gaz)}/O_{2(gaz)}/CO_{2(gaz)}) permettent d'optimiser la réaction de chloration, soit par optimisation du design du réacteur et des quantités par lot de mélange gazeux réactif, sel liquide et oxyde métallique solide dans le cas d'un fonctionnement par lots, soit par pilotage de la réaction de chloration dans le cas d'un fonctionnement continu.

Le procédé VTSA utilisé dans les différents pièges VTSA à H₂O_{(gaz)}, HCl_{(gaz)}, Cl_{2(gaz)}, CCl_{4(gaz)}, et CO_{(gaz)}/CO_{2(gaz)} va maintenant être décrit en référence à la figure 3. Chacun de ces pièges 12, 5, 7, 9 et 11b comprend idéalement :
- quatre colonne d'adsorption ou adsorbeurs 100, 200, 300, 400, contenant un milieu adsorbant sélectif apte à arrêter (capturer) un composé cible chloré ou non chloré (CCl_{4(gaz)}, HCl_{(gaz)} ou Cl_{2(gaz)} ou CO_{(gaz)}/CO_{2(gaz)} ou H₂O_{(gaz)}),
- un conduit d'alimentation 600 pour l'alimentation des colonnes en ciel gazeux à traiter (gaz issu du réacteur ou issu du précédent piège VTSA), le conduit d'alimentation 600 étant relié à l'entrée d'alimentation 120, 50, 70, 90, 110 du piège VTSA en question,

- un conduit de production 700, relié à la sortie de production 122, 52, 72, 92, 112 du piège VTSA,
- un conduit de purge 800 pour l'extraction des colonnes du composé cible désorbé, la conduit de purge étant relié à la sortie de purge 126, 56, 76, 96, 116 du piège VTSA,
- et un conduit d'élution 900 pour l'injection dans les colonnes d'un gaz d'élution, le conduit d'élution 900 étant relié à l'entrée d'élution 124, 54, 74, 94, 114 du piège VTSA.

A l'une de ses extrémités, chaque colonne d'adsorption 100, 200, 300, 400 est associée d'une part à un premier conduit 101, 201, 301, 401 équipé d'une première vanne, dite vanne d'alimentation, qui permet de connecter ladite colonne au conduit d'alimentation 600, et d'autre part à un deuxième conduit 102, 202, 302, 402, équipé d'une deuxième vanne, dite vanne de purge, qui permet de connecter la colonne au conduit de purge 800.

A son autre extrémité, chaque colonne d'adsorption 100, 200, 300, 400 est associé d'une part à un troisième conduit 103, 203, 303, 403 équipé d'une troisième vanne, dite vanne de production, qui permet de connecter ladite colonne au conduit de production 700, et d'autre part à un quatrième conduit 104, 204, 304, 404, équipé d'une quatrième vanne, dite vanne d'élution, qui permet de connecter la colonne au conduit d'élution 900.

Le piège VTSA fonctionne selon un schéma de fonctionnement continu comprenant douze étapes avec six phases distinctes définissant un cycle, à savoir :
- une phase d'adsorption : la colonne concernée est continûment alimentée par le ciel gazeux à traiter, pour permettre la circulation du gaz au contact du lit fixe constitué d'un milieu adsorbant arrêtant spécifiquement un composé cible tandis que les autres gaz traversent la colonne avec le gaz porteur noble ou inerte. A cette fin, la vanne d'alimentation et la vanne de production de la colonne sont ouvertes. En fin de phase d'adsorption, le milieu adsorbant de la colonne est saturé en composé cible. Durant la phase d'adsorption, la pression dans la colonne vaut sensiblement la pression atmosphérique aux pertes de charges près dans le circuit gaz.
- une phase de purge sous vide : Au début de la phase de purge sous vide, la vanne de production de la colonne est fermée, alors que la vanne d'alimentation est encore en position ouverte, puis, dans le même temps, la vanne d'alimentation de la colonne est fermée, tandis que la vanne d'alimentation d'une autre (deuxième) colonne qui vient d'être régénérée est ouverte afin d'envoyer le ciel gazeux à traiter dans cette autre colonne, et la vanne de purge de la (première) colonne est ouverte tandis que la sortie de purge du piège est mise en contact avec une pompe à vide (non représentée). La pression absolue dans la (première) colonne d'adsorption chute et les premières molécules piégées dans l'étape précédente sont désorbées du milieu adsorbant puis envoyées vers un compresseur ou un liquéfacteur en refoulement de pompe à vide (c'est le cas ici du piège 12 à H₂O_{(gaz)}, 5 à HCl_{(gaz)} et du piège 7 à Cl_{2(gaz)}) ou réinjectées dans le circuit comme expliqué précédemment (cas du piège 9 à CCl_{4(gaz)} et éventuellement du piège à HCl_{(gaz)} ou à Cl_{2(gaz)} dans le cas non illustré où l'agent chlorant enrichi contient du HCl_{(gaz)} ou du Cl_{2(gaz)}). La pompe à vide peut être légèrement gavée en gaz inerte ou noble, propre et sec, pour réduire le potentiel chimique des gaz chlorés et donc augmenter la durée de vie des équipements ;
- une phase de purge sous vide chauffé : Au début de la phase de purge sous vide chauffé, un élément chauffant s'enclenche pour chauffer indirectement le milieu adsorbant et la charge adsorbée restante, soit au niveau de la paroi de la colonne soit à l'intérieur même de la colonne ; le montage global (état ouvert/fermé des diverses vannes, mise en contact de la sortie de purge du piège avec la pompe à vide) reste identique à celui de l'étape précédente. La rampe de température de chauffe peut-être est comprise entre 0,1 et 20°C/min et préférablement entre 1 et 5°C/min. La température maximale atteinte durant l'étape peut être comprise entre 50 et 500°C, préférentiellement entre 150°C et 250°C. Il peut y avoir une étape de montée en température et une étape de stabilité avec un palier à la température haute ;
- une phase d'élution sous vide chauffé : durant cette phase, la vanne de purge de la colonne étant toujours ouverte et la sortie de purge du piège étant toujours en contact avec une pompe à vide, la vanne d'élution de la colonne s'ouvre et un gaz noble ou inerte, propre et sec, est injecté dans le conduit de d'élution via l'entrée d'élution du piège pour qu'une circulation sous vide du gaz à contrecourant du sens de circulation du gaz en phase d'adsorption puisse venir éluer à chaud les molécules piégées dans la colonne. Sous vide, la consommation en gaz d'élution est minimisée pour un même renouvellement en gaz réel durant cette étape de régénération, permettant une minimisation de la consommation en gaz noble ou inerte ainsi qu'une maximisation de la pureté moyenne des composés chlorés récupérés. La température est maintenue entre 50 et 500°C et préférablement entre 150°C et 250°C, le renouvellement en gaz est compris entre 0,5 et 100 fois le volume de l'adsorbeur par heure et vaut idéalement entre 10 et 50 fois le volume de l'adsorbeur par heure ;
- une phase de refroidissement : en principe l'adsorbant est parfaitement régénéré en fin d'élution sous vide chauffé. Le refroidissement de la colonne est amorcé par l'arrêt de la résistance chauffante puis, une fois une certaine température basse franchie, la fermeture de l'ensemble des vannes de pied (vannes d'alimentation et de purge) et de tête (vannes de production et d'élution) de la colonne est enclenchée ;
- une phase de pressurisation : A la fin de l'étape de refroidissement, la vanne d'élution ou la vanne d'alimentation de la colonne s'ouvre, et du gaz noble propre et sec ou du ciel gazeux à traiter vient pressuriser le système à la pression d'intérêt. Ensuite, la colonne est alors prête à démarrer un nouveau cycle.

Comme précédemment indiqué, chaque piège VTSA fonctionne selon un schéma en douze étapes :
- Etape N°1 : l'adsorbeur 100 commence une phase d'adsorption (et donc un nouveau cycle); cet adsorbeur 100 est donc relié aux conduits d'alimentation 600 et de production 700 tout en étant isolé des conduits d'élution 800 et de purge 900 ; l'adsorbeur 200 est en phase de purge sous vide, cet adsorbeur est donc relié au conduit de purge 800 tout en étant isolé des conduits d'alimentation, de production et d'élution, par ailleurs la sortie de purge du piège est en contact avec une pompe à vide ; l'adsorbeur 300 est en phase de refroidissement (toutes ses vannes sont fermées), l'adsorbeur 400 est en phase de pressurisation (sa vanne d'élution ou d'alimentation est ouverte tandis que ses vannes de production et de purge sont fermées).
- Etape N°2 : l'adsorbeur 100 est toujours en phase d'adsorption (ses vannes restent donc dans le même état qu'à l'étape N°1) ; l'adsorbeur 200 est en phase de purge sous vide chauffé (ses vannes restent dans le même état qu'à l'étape précédente et son dispositif de chauffage est mis en route) ; l'adsorbeur 300 est toujours en phase de refroidissement ; l'adsorbeur 400 est toujours en phase de pressurisation ;
- Etape N° 3 : l'adsorbeur 100 est toujours en phase d'adsorption ; l'adsorbeur 200 passe en phase d'élution sous vide chauffé (sa vanne d'élution s'ouvre, sa vanne de purge reste ouverte, ses vannes d'alimentation et de production restent fermées, son dispositif de chauffage reste en marche, de même que la pompe à vide à la sortie de purge du piège) ; l'adsorbeur 300 est toujours en phase de refroidissement ; l'adsorbeur 400 est toujours en phase de pressurisation ;
- Etape N°4 : l'adsorbeur 100 passe en phase de purge sous vide (ses vannes d'alimentation et de production se ferment, sa vanne d'élution est toujours fermée et sa vanne de purge s'ouvre, la sortie de purge du piège restant connectée à la pompe à vide) ; l'adsorbeur 200 passe en phase de refroidissement (toutes vannes fermées) ; l'adsorbeur 300 passe en phase de pressurisation (sa vanne d'élution ou d'alimentation s'ouvre, sa vanne de purge se ferme, sa vanne de production reste fermée) ; l'adsorbeur 400 passe en phase d'adsorption (sa vanne d'élution se ferme, ses vannes d'alimentation et de production s'ouvrent, sa vanne de purge reste fermée) ;
- Etape N° 5 : l'adsorbeur 100 passe en phase de purge sous vide chauffé (ses vannes restent dans le même état qu'à l'étape précédente et son dispositif de chauffage est mis en route) ; l'adsorbeur 200 est toujours en phase de refroidissement ; l'adsorbeur 300 est toujours en phase de pressurisation ; l'adsorbeur 400 est toujours en phase d'adsorption ;
- Etape N° 6 : l'adsorbeur 100 passe en phase d'élution sous vide chauffé (sa vanne d'élution s'ouvre, sa vanne de purge reste ouverte, ses vannes d'alimentation et de production restent fermées, son dispositif de chauffage reste en fonctionnement, de même que la pompe à vide à la sortie de purge du piège) ; l'adsorbeur 200 est toujours en phase de refroidissement ; l'adsorbeur 300 est toujours en phase de pressurisation ; l'adsorbeur 400 est toujours en phase d'adsorption ;
- Etape N°7 : l'adsorbeur 100 passe en phase de refroidissement (fermeture de toutes ses vannes et arrêt de son dispositif de chauffage) ; l'adsorbeur 200 passe en phase de pressurisation (ouverture de sa vanne d'élution ou d'alimentation, les autres vannes restant fermées) ; l'adsorbeur 300 passe en phase d'adsorption (fermeture de sa vanne d'élution, ouverture de ses vannes d'alimentation et de production, sa vanne de purge restant fermée) et l'adsorbeur 400 passe en phase de purge sous vide (fermeture de ses vannes d'alimentation et de production et ouverture de sa vanne de purge) ;
- Etape N°8 : l'adsorbeur 100 reste en phase de refroidissement; l'adsorbeur 200 reste en phase de pressurisation ; l'adsorbeur 300 reste en phase d'adsorption ; l'adsorbeur 400 passe en phase de purge chauffée (mise en route de son dispositif de chauffage) ;
- Etape N°9 : l'adsorbeur 100 reste en phase de refroidissement; l'adsorbeur 200 reste en phase de pressurisation ; l'adsorbeur 300 reste en phase d'adsorption ; l'adsorbeur 400 passe en phase d'élution sous vide chauffé (ouverture de sa vanne d'élution et maintien de son dispositif de chauffage) ;
- Etape N°10 : l'adsorbeur 100 passe en phase de pressurisation (ouverture de sa vanne d'élution ou d'alimentation, les autres vannes restant fermées) ; l'adsorbeur 200 passe en phase d'adsorption (fermeture de sa vanne d'élution, ouverture de ses vannes d'alimentation et de production, sa vanne de purge restant fermée) ; l'adsorbeur 300 passe en phase de purge sous vide (fermeture de ses vannes d'alimentation et de production et ouverture de sa vanne de purge) ; l'adsorbeur 400 passe en phase refroidissement (fermeture de toutes ses vannes et arrêt de son dispositif de chauffage) ;
- Etape N°11 : l'adsorbeur 100 reste en phase de pressurisation; l'adsorbeur 200 reste en phase d'adsorption ; l'adsorbeur 300 passe en phase de purge chauffée (mise en route de son dispositif de chauffage) ; l'adsorbeur 400 reste en phase de refroidissement ;
- Etape N°12 : l'adsorbeur 100 reste en phase de pressurisation l'adsorbeur 200 reste en phase d'adsorption ; l'adsorbeur 300 passe en phase d'élution chauffé (ouverture de sa vanne d'élution et maintien de son dispositif de chauffage) ; l'adsorbeur 400 reste en phase refroidissement.

A l'issue de l'étape N°12, le schéma de fonctionnement reprend à l'étape N°1 ci-dessus.

Les étapes de fonctionnement décrites ci-dessus des pièges VTSA à quatre colonnes de l'installation de la Fig. 2 sont résumées dans le tableau suivant :

**[table1]**

| Etape | 1 | 2 | 3 | 4 | 5 | 6 | 7 | 8 | 9 | 10 | 11 | 12 |
|---|---|---|---|---|---|---|---|---|---|---|---|---|
| Ads. 100 | adsorption | | | purge sous vide | purge sous vide chauffé | élution sous vide chauffé | refroidissement | | | pressurisation | | |
| Ads. 200 | purge sous vide | purge sous vide chauffé | élution sous vide chauffé | refroidissement | | | pressurisation | | | adsorption | | |
| Ads. 300 | refroidissement | | | pressurisation | | | adsorption | | | purge sous vide | purge sous vide chauffé | élution sous vide chauffé |
| Ads. 400 | pressurisation | | | adsorption | | | purge sous vide | purge sous vide chauffé | élution sous vide chauffé | refroidissement | | |

Le procédé et l'installation selon l'invention peuvent faire l'objet de nombreuses variantes dès lors qu'ils restent dans le cadre des revendications annexées. A titre d'exemple, l'installation peut comprendre de plus des moyens de séparation du ³⁵Cl et du ³⁷Cl dans les composés chlorés récupérés.

## Revendications

1. Procédé de synthèse d'un sel combustible nucléaire par chloration au moyen d'un agent chlorant enrichi en ³⁷Cl, la chloration portant sur un ou plusieurs oxydes métalliques solides MₓO_{y(solide)} où M est choisi parmi le plutonium (Pu), l'uranium (U), le magnésium (Mg), l'américium (Am), le thorium (Th), le curium (Cm), l'aluminium (Al) et le sodium (Na), l'un au moins desdits oxydes métalliques solides contenant un élément fissile, la réaction de chloration ayant lieu dans un réacteur (2) contenant un milieu réactionnel triphasique ou diphasique qui comprend le ou les oxydes métalliques solides MₓO_{y(solide)}, un sel liquide en cas de milieu réactionnel triphasique et un mélange gazeux réactif, lequel mélange gazeux réactif comprend ledit agent chlorant enrichi et un gaz porteur (G) choisi parmi les gaz nobles, tels que l'argon et l'hélium, et les gaz inertes, tels que le diazote, la réaction de chloration produisant au moins un chlorure métallique MᵤClᵥ formant le sel combustible nucléaire, ainsi qu'un ciel gazeux contenant un ou des composés chlorés (HCl_{(gaz)} , Cl_{2(gaz)}, CCl_{4(gaz)}) ainsi que des composés non chlorés (CO_{(gaz)}, CO_{2(gaz)}, O_{2(gaz)}, H_{2(gaz)}, H₂O_{(gaz)}),
le procédé de synthèse de sel combustible nucléaire étant **caractérisé en ce que** :
- ledit ciel gazeux de la réaction de chloration est récupéré en sortie du réacteur (2),
- les composés chlorés contenus dans le ciel gazeux sortant du réacteur sont isolés à l'aide d'une première série de pièges à composés chlorés (4, 6, 8 ; 5, 7, 9) fonctionnant par adsorption sélective, chacun desdits pièges à composés chlorés étant configuré pour capturer de façon sélective un composé chloré à l'exclusion des composés non chlorés présents dans ledit ciel gazeux.

2. Procédé de synthèse selon la revendication 1, dans lequel :
- l'agent chlorant enrichi comprend du dichlore gazeux (Cl_{2(gaz)}) enrichi en ³⁷Cl et/ou du tétrachlorométhane gazeux (CCl_{4(gaz)}) enrichi en ³⁷Cl et/ou du chlorure d'hydrogène gazeux (HCl_{(gaz)}) enrichi en ³⁷Cl, la réaction de chloration suivant le schéma réactionnel
**a** CCl_{4(gaz)} + **b** Cl_{2(gaz)} + **c** HCl_{(gaz)} + **d** MₓO_{y(solide)} **=> e** MᵤClᵥ₍ₛₒₗᵤₜᵢₒₙ₎ **+f** Cl_{2(gaz)} + **g** HCl_{(gaz)} **+h** CO_{(gaz)} + **i** CO_{2(gaz)} + **j** O_{2(gaz)} + **k** H_{2(gaz)} + **l** H₂O_{(gaz)}
- dans le cas d'un mélange triphasique, le sel liquide est du chlorure de sodium NaCl_{(liquide)},
- la première série de pièges à composés chlorés comprend, successivement et dans cet ordre, un piège sélectif à HCl_{(gaz)} (4 ; 5), puis un piège sélectif à Cl_{2(gaz)} (6 ; 7) puis, de façon optionnelle, un piège à CCl_{4(gaz)} (8 ; 9).

3. Procédé de synthèse selon l'une des revendications 1 à 2, dans lequel :
- la réaction de chloration est surveillée et pilotée par un système de contrôle (500),
- le ciel gazeux traité sortant de la première série de pièges à composés chlorés (4, 6, 8 ; 5, 7, 9), est envoyé dans un analyseur (504) relié audit système de contrôle et configuré pour mesurer au moins une caractéristique d'au moins l'un des composés non chlorés (CO_{(gaz)}, CO_{2(gaz)}, O_{2(gaz)}, H_{2(gaz)}) produits par la réaction de chloration, caractéristique qui est ensuite utilisée par le système de contrôle (500) pour accéder à des informations sur la réaction de chloration.

4. Procédé de synthèse selon la revendication 3, mis en oeuvre dans une installation dans laquelle le réacteur (2) est équipé d'un système de chauffage, ainsi que d'un système d'agitation dans le cas d'un milieu réactionnel triphasique, le procédé de synthèse comprenant :
- le comptage volumétrique du ciel gazeux traité entrant dans l'analyseur, à l'aide d'un compteur de gaz volumétrique (502) équipé d'un émetteur à impulsion instrumenté en pression et en température,
- le suivi en temps réel des données suivantes :
-- la température du milieu réactionnel,
-- les débits molaires en CO_{(gaz)} et/ou CO_{2(gaz)} et/ou O_{2(gaz)} et/ou H_{2(gaz)}, calculés à partir du débit volumique mesuré par le compteur volumétrique et des concentrations molaires en O_{2(gaz)} et/ou CO_{(gaz)} et/ou CO_{2(gaz)} et/ou H_{2(gaz)} mesurées par l'analyseur,
-- l'avancement et la vitesse de la réaction de chloration, déterminées à partir des mesures de température et de pression fournies par le compteur volumétrique et des débits molaires en O_{2(gaz)} et/ou CO_{(gaz)} et/ou CO_{2(gaz)} et/ou H_{2(gaz)}, connaissant le débit d'injection en mélange gazeux réactif dans le réacteur et la teneur en agent chlorant enrichi dudit mélange gazeux réactif,
- un pilotage en temps réel du système de chauffage du réacteur, ainsi que du système d'agitation du réacteur lorsqu'il existe,
- une régulation en temps réel de la température du mélange gazeux réactif injecté dans le milieu réactionnel,
- une régulation en temps réel du débit de l'agent chlorant enrichi et/ou une régulation en temps réel du débit du gaz porteur à l'entrée d'un contacteur (18), saturé en agent chlorant enrichi et dans lequel est formé le mélange gazeux réactif, et/ou une régulation en temps réel du débit du mélange gazeux réactif à l'entrée (20) du réacteur,
- une régulation en temps réel de la température du milieu réactionnel par pilotage du système de chauffage du réacteur (2) et du système d'agitation du réacteur lorsqu'ils existe, et par pilotage du débit et de la température du mélange gazeux réactif introduit dans le réacteur,
- et, si le procédé est mis en oeuvre de façon continue, une régulation du débit de sel liquide injecté dans le milieu réactionnel et du débit d'oxyde(s) métallique(s) solide(s) injecté(s) dans le milieu réactionnel ou introduit(s) dans le sel liquide.

5. Procédé de synthèse selon l'une des revendications 1 à 4, mis en oeuvre sous la forme d'un procédé par lots, et dans lequel, à la fin de la production d'un lot :
- chacun des pièges (4, 6, 8) de la première série de pièges à composés chlorés est déconnecté du circuit et est régénéré à une température comprise 35°C et 500°C, sous vide à une pression absolue comprise entre 0,001 mbara et 900 mbara, avec une élution par balayage du média adsorbant au moyen d'un gaz d'élution noble ou inerte, propre et sec,
- les composés chlorés ainsi désorbés sont comprimés et/ou refroidis pour être stockés sous forme liquide ou solide.

6. Procédé de synthèse selon l'une des revendications 1 à 4, mis en oeuvre sous la forme d'un procédé continu et dans lequel :
- chacun des pièges (5, 7, 9) de la première série de pièges à composés chlorés est un piège, dit piège VTSA, fonctionnant selon un procédé d'adsorption modulé en vide et en température, lequel piège VTSA comprend un milieu adsorbant sélectif pour le composé chloré cible (Cl_{2(gaz)}, CCl_{4(gaz)}, HCl_{(gaz)}), une entrée d'alimentation (50, 70, 90) pour l'introduction du ciel gazeux à traiter, une sortie de production (52, 72, 92) d'où sort le ciel gazeux traité, une entrée d'élution (54, 74, 94) pour l'introduction d'un gaz d'élution pour la régénération du milieu adsorbant sélectif, et une sortie de purge (56, 76, 96) pour la récupération d'un gaz de purge riche en composé chloré piégé élué, le milieu adsorbant étant choisi parmi des milieux poreux qui sont aptes à adsorber de façon sélective le composé chloré cible et qui sont perméables et résistants au gaz de fond constitué du gaz porteur (G) et des composés non chlorés présent dans le ciel gazeux de la réaction de chloration,
- les pièges VTSA à composés chlorés (5, 7, 9) comprennent chacun quatre colonnes d'adsorption (100, 200, 300, 400), fonctionnant en alternance pour capturer et rejeter sélectivement le composé chloré cible (Cl_{2(gaz)}, CCl_{4(gaz)}, HCl_{(gaz)}), selon un schéma de fonctionnement continu comprenant douze étapes avec six phases distinctes : adsorption, purge sous vide, purge sous vide chauffé, élution sous vide chauffé, refroidissement et pressurisation.

7. Procédé de synthèse selon la revendication 6, dans lequel les pièges VTSA à composés chlorés comprennent successivement et dans cet ordre, un piège VTSA sélectif à HCl_{(gaz)} (5), un piège VTSA sélectif à Cl_{2(gaz)} (7) et un piège VTSA à CCl_{4(gaz)} (9),et dans lequel :
- le milieu adsorbant sélectif du piège VTSA sélectif à HCl_{(gaz)} (5) est choisi parmi les matériaux carbonés microporeux, tels que les nanotubes de carbone ou les carbones dérivés de carbures ou les charbons actifs ou autres tamis moléculaires carbonés, et les zéolithes artificielles, notamment les zéolithes 3A, qui ont une taille de pores caractéristique comprise entre 0,3 nm et 0,4 nm,
- le milieu adsorbant sélectif du piège VTSA sélectif à Cl_{2(gaz)} (7) est choisi parmi les matériaux carbonés microporeux, tels que les nanotubes de carbone ou les carbones dérivés de carbures ou les charbons actifs ou autres tamis moléculaires carbonés, et les zéolithes artificielles de type Y, qui ont une taille de pores caractéristique comprise entre 0,4 nm et 0,5 nm,
- le milieu adsorbant du piège VTSA à CCl_{4(gaz)} (9) est choisi parmi les charbons actifs microporeux, les zéolithes artificielles ou naturelles, les gels de silice et les alumines activées, qui ont une taille de pores caractéristique comprise entre 0,3 nm et 2 nm.

8. Procédé de synthèse selon la revendication 7, dans lequel :
- le gaz de purge issu du piège VTSA à CCl_{4(gaz)} (9) est réintroduit dans le mélange gazeux réactif en amont du réacteur (2),
- le gaz de purge issu du piège VTSA sélectif à Cl_{2(gaz)} (7) est réintroduit dans le mélange gazeux réactif en amont du réacteur (2) et/ou liquéfié dans un liquéfacteur (14) aux fins de stockage, la phase gazeuse issue de ce liquéfacteur étant réintroduite dans le ciel gazeux à traiter à l'entrée du piège VTSA sélectif à Cl_{2(gaz)} (7),
- le gaz de purge issu du piège VTSA sélectif à HCl_{(gaz)} (5) est réintroduit dans le mélange gazeux réactif en amont du réacteur (2) et/ou liquéfié dans un liquéfacteur (16) aux fins de stockage, la phase gazeuse issue de ce liquéfacteur étant réintroduite dans le ciel gazeux à traiter à l'entrée du piège VTSA sélectif à HCl_{(gaz)} (5).

9. Procédé de synthèse selon l'une des revendications 1 à 8, dans lequel :
- le ciel gazeux sortant de la première série de piège à composés chlorés (4, 6, 8 ; 5, 7, 9) ou sortant de l'analyseur (504) est envoyé dans une seconde série (11) de pièges à composés non chlorés, lesdits pièges étant des pièges par adsorption sélective,
- le ciel gazeux traité sortant de la seconde série (11) de pièges à composés non chlorés est réintroduit dans le mélange gazeux réactif en amont du réacteur (2) et/ou est utilisé comme gaz d'élution pour la régénération de l'un ou plusieurs des pièges à composés chlorés (4, 6, 8 ; 5, 7, 9) ou non chlorés (11b).

10. Procédé de synthèse selon la revendication 9, mis en oeuvre de façon continue et dans lequel la seconde série (11) de pièges à composés non chlorés comprend un piège sélectif à O_{2(gaz)} (11a), un piège sélectif à H_{2(gaz)}, et un piège VTSA sélectif à CO_{(gaz)}/CO_{2(gaz)} (11b) dont le milieu adsorbant est choisi parmi les matériaux carbonés poreux, les zéolithes artificielles ou naturelles de type A, les zéolithes 5A, les gels de silice et les alumines activées.

11. Procédé de synthèse selon l'une des revendications 1 à 10, dans lequel :
- le ciel gazeux récupéré du réacteur (2) est soumis à un prétraitement avant son passage dans la première série de pièges à composés chlorés (4, 6, 8 ; 5, 7, 9), lequel prétraitement comprend le passage du ciel gazeux issu du réacteur (2) dans un sécheur (3 ; 12) ;
- le sécheur (3 ; 12) comprend un desiccant du type zéolithe 3A ou du type Drierite^{®}, apte à retenir H₂O_{(gaz)} et perméable et résistant à HCl_{(gaz)}, CCl_{4(gaz)}, Cl_{2(gaz)}, O_{2(gaz)}, CO_{(gaz)}, CO_{2(gaz)} et H_{2(gaz)} ;
- si le procédé de synthèse est un procédé par lots, le sécheur (3) est régénéré à une température comprise entre 100°C et 500°C, préférentiellement entre 150°C et 250°C, sous vide à une pression comprise 0,001mbar et 900mbar, et ce avec un balayage au moyen d'un gaz noble ou inerte, propre et sec, ayant un point de rosé inférieur à -80°C, de préférence inférieur à -100°C,
- si le procédé de synthèse est un procédé continu, le sécheur (12) est un dispositif du type VTSA comprennent au moins deux colonnes d'adsorption (100, 200, 300, 400), fonctionnant en alternance pour capturer et rejeter sélectivement l'eau de façon continue.

12. Procédé de synthèse selon l'une des revendications 1 à 11, comprenant une étape supplémentaire d'élimination du monoxyde de carbone contenu dans le ciel gazeux traité sortant de la seconde série (11) de pièges à composés non chlorés ou, en l'absence de seconde série de pièges à composés non chlorés, sortant de l'analyseur (504) ou, en l'absence d'analyseur, sortant de la première série de pièges à composés chlorés (4, 6 ,8 ; 5, 7, 9).

13. Installation de synthèse d'un sel combustible nucléaire, par chloration d'un ou plusieurs oxydes métalliques solides MₓO_{y(solide)} au moyen d'un agent chlorant enrichi en ³⁷Cl, où M est choisi parmi le plutonium (Pu), l'uranium (U), le magnésium (Mg), l'américium (Am), le thorium (Th), le curium (Cm), l'aluminium (Al) et le sodium (Na), l'un au moins desdits oxydes métalliques solides contenant un élément fissile, l'installation comprenant un réacteur (2) contenant un milieu réactionnel triphasique ou diphasique qui comprend le ou les oxydes métalliques solides MₓO_{y(solide)}, un sel liquide dans le cas d'un mélange triphasique, et un mélange gazeux réactif, lequel mélange gazeux réactif comprend ledit agent chlorant enrichi et un gaz porteur (G) choisi parmi les gaz nobles, tels que l'argon et l'hélium, et les gaz inertes, tels que le diazote, la réaction de chloration produisant au moins un chlorure métallique MᵤClᵥ₍ₛₒₗᵤₜᵢₒₙ₎ formant le sel combustible nucléaire, ainsi qu'un ciel gazeux contenant du gaz porteur, un ou des composés chlorés (HCl_{(gaz)}, Cl_{2(gaz)}, CCl_{4(gaz)}) et des composés non chlorés (CO_{(gaz)}, CO_{2(gaz)}, O_{2(gaz)}, H_{2(gaz)}),
l'installation étant **caractérisée en ce que** :
- le réacteur (2) comprend une sortie gaz (22) par laquelle le ciel gazeux de la réaction de chloration est récupéré,
- l'installation comprend, en sortie du réacteur (2), une première série de pièges à composés chlorés (4, 6, 8 ; 5, 7, 9) fonctionnant par adsorption sélective, chacun desdits pièges à composés chlorés comprenant un adsorbant sélectif configuré pour capturer de façon sélective un composé chloré à l'exclusion des composés non chlorés présents dans le ciel gazeux.

14. Installation selon la revendication 13, comprenant de plus :
- un système de contrôle (500) prévu pour surveiller et piloter la réaction de chloration,
- en aval de la première série de pièges à composés chlorés, un analyseur (504), qui est relié audit système de contrôle et dans lequel est introduit le ciel gazeux traité sortant de la première série de pièges à composés chlorés (4, 6, 8 ; 5, 7, 9), ledit analyseur (504) étant configuré pour mesurer au moins une caractéristique d'au moins l'un des composés non chlorés (CO_{(gaz)}, CO_{2(gaz)}, O_{2(gaz)} H_{2(gaz)}) produits par la réaction de chloration,
- de façon optionnelle, en aval de l'analyseur (504), une seconde série (11) de pièges à composés non chlorés, chacun desdits pièges à composés non chlorés étant configuré pour capturer au moins l'un des composés gazeux non chlorés (CO_{(gaz)}, CO_{2(gaz)}, O_{2(gaz)}, H_{2(gaz)}) présents dans le ciel gazeux de la réaction de chloration.

15. Installation selon la revendication 14, configurée pour mettre en oeuvre un milieu réactionnel triphasique et pour fonctionner de façon continue, et dans laquelle :
- l'agent chlorant enrichi comprend du dichlore gazeux (Cl_{2(gaz)}) enrichi en ³⁷Cl et/ou du tétrachlorométhane gazeux (CCl_{4(gaz)}) enrichi en ³⁷Cl et/ou du chlorure d'hydrogène gazeux (HCl_{(gaz)}) enrichi en ³⁷Cl, la réaction de chloration suivant le schéma réactionnel
**a** CCl_{4(gaz)} + **b** Cl_{2(gaz)} + **c** HCl_{(gaz)} + **d** MₓO_{y(solide)} **=> e** MᵤClᵥ₍ₛₒₗᵤₜᵢₒₙ₎ **+f** Cl_{2(gaz)} + **g** HCl_{(gaz)} **+h** CO_{(gaz)} + **i** CO_{2(gaz)} + **j** O_{2(gaz)} + **k** H_{2(gaz)} + **l** H₂O_{(gaz)},
- le sel liquide est du chlorure de sodium NaCl_{(liquide)},
-la première série de pièges à composés chlorés comprend, successivement et dans cet ordre, un piège VTSA sélectif à HCl_{(gaz)} (5), puis un piège VTSA sélectif à Cl_{2(gaz)} (7) puis, de façon optionnelle, un piège VTSA à CCl_{4(gaz)} (9), lesdits pièges VTSA étant modulés en vide et en température et comprenant chacun quatre colonnes d'adsorption contenant un milieu adsorbant sélectif pour le composé chloré cible (HCl_{(gaz)}, Cl_{2(gaz)} ou CCl_{4(gaz)}), une entrée d'alimentation (50, 70, 90) pour l'introduction du ciel gazeux à traiter, une sortie de production (52, 72, 92) d'où sort le ciel gazeux traité, une entrée d'élution (54, 74, 94) pour l'introduction d'un gaz d'élution pour la régénération du milieu adsorbant, et une sortie de purge (56, 76, 96) pour la récupération d'un gaz de purge riche en composé chloré piégé élué, le milieu adsorbant étant choisi parmi des milieux poreux qui sont aptes à adsorber le composé chloré cible et qui sont perméables et résistants au gaz de fond constitué de gaz porteur, de dioxygène (O_{2(gaz)}), de monoxyde de carbone (CO_{(gaz)}), de dioxyde de carbone (CO_{2(gaz)}) et de dihydrogène (H_{2(gaz)}), les quatre colonnes du piège VTSA fonctionnant en alternance pour capturer et rejeter sélectivement le composé chloré cible (HCl_{(gaz)}, CCl_{4(gaz)} ou Cl_{2(gaz)}) selon un schéma de fonctionnement continu comprenant douze étapes avec six phases distinctes : adsorption, purge sous vide, purge sous vide chauffé, élution sous vide chauffé, refroidissement et pressurisation,
- la seconde série (11) de pièges à composés non chlorés comprend un piège à O_{2(gaz)} (11a), un piège à H_{2(gaz)} et un piège à CO_{(gaz)}/CO_{2(gaz)} (11b), le piège à CO_{(gaz)/}CO_{2(gaz)} (11b) étant un piège VTSA dont le milieu adsorbant est choisi parmi les matériaux carbonés poreux, les zéolithes artificielles ou naturelles de type A, les zéolithes 5A, les gels de silice et les alumines activées aptes à arrêter le CO_{(gaz)}/CO_{2(gaz)},
- l'installation comprend un compteur de gaz volumétrique (502), agencé immédiatement en amont de l'analyseur (504), relié au système de contrôle (500) et équipé d'un émetteur à impulsion instrumenté en pression et en température,
- l'installation comprend un contacteur (18), saturé en agent chlorant enrichi et dans lequel est formé le mélange gazeux réactif, lequel contacteur comprend une entrée en gaz porteur (G), un capteur de température et un système de chauffage,
- l'installation comprend un contrôleur de débit (506) agencé immédiatement en amont de l'entrée en gaz porteur du contacteur,
- le réacteur (2) est un réacteur-mélangeur (2) comprenant un capteur de température, un système de chauffage et un système d'agitation,
- le système de contrôle (500) est configuré pour
-- collecter les mesures de température des capteurs de température du contacteur (18) et du réacteur-mélangeur (2) ou du réacteur solide-gaz selon la voie de synthèse retenue,
-- piloter en temps réel le système de chauffage du contacteur afin de réguler en temps réel la température du mélange gazeux réactif injecté dans le milieu réactionnel,
-- réguler en temps réel le débit du mélange gazeux réactif introduit dans le réacteur-mélangeur ou le réacteur solide gaz selon la voie de synthèse retenue par pilotage du débit de gaz porteur introduit dans le contacteur (18),
-- calculer en temps réel la température du milieu réactionnel, les débits molaires en CO_{(gaz)} et/ou CO_{2(gaz)} et/ou O_{2(gaz)} produits par la réaction de chloration, ainsi que l'avancement et la vitesse de la réaction de chloration,
-- réguler en temps réel la température du milieu réactionnel par pilotage des systèmes de chauffage et d'agitation du réacteur-mélangeur (2) et du système de chauffage du contacteur (18), et éventuellement aussi par pilotage du débit de gaz porteur introduit dans le contacteur,
-- et réguler en temps réel le débit du sel liquide injecté dans le milieu réactionnel et le débit d'oxyde(s) métallique(s) solide(s) injecté(s) dans le milieu réactionnel ou introduit(s) dans le sel liquide.
